# EUROPÄISCHE PATENTSCHRIFT

(11) **EP 4 260 041 B1**
(45) Veröffentlichungstag und Bekanntmachung des Hinweises auf die Patenterteilung: **27.08.2025**
(21) Anmeldenummer: 21835183.1
(22) Anmeldetag: 02.12.2021
(51) Int. Cl.: G01M 17/007, G01M 17/02

(54) **REIFENPRÜFSTAND MIT EINER HEXAPOD-ANORDNUNG**
TYRE TEST STAND WITH A HEXAPOD ARRANGEMENT
BANC D'ESSAI DE PNEUMATIQUE AVEC AGENCEMENT HEXAPODE

(30) Priorität: 10.12.2020 DE 102020215617
(43) Veröffentlichungstag der Anmeldung: 18.10.2023
(73) Patentinhaber: ZF Friedrichshafen AG, 88046 Friedrichshafen (DE)
(72) Erfinder: DWOLINSKI, Thomas, 94127 Neuburg am Inn (DE)
(74) Vertreter: ZF Friedrichshafen AG
(86) Internationale Anmeldenummer: PCT/EP2021/083945
(87) Internationale Veröffentlichungsnummer: WO 2022/122540

(56) Entgegenhaltungen:
- WO-A1-2006/002111
- WO-A1-2019/215187
- DE-A1- 102009 002 169
- GB-A- 2 544 299
- MTS SYSTEMS CORPORATION: "MTS Flat-Trac III SS Tire Test System For Steady State Force and Moment Testing of Passenger Car Tires", 31 December 2003 (2003-12-31), pages 1 - 2, XP055331063, Retrieved from the Internet <URL:https://www.mts.com/cs/groups/public/documents/library/dev_003377.pdf> [retrieved on 20161221]

## Beschreibung

Die vorliegende Erfindung betrifft einen Reifenprüfstand.

Reifenprüfstände sind aus dem Stand der Technik bekannt. Diese Reifenprüfstände weisen gewöhnlich einen Rahmen und einen Reifenhalter auf. An dem Reifenhalter kann ein Reifen mit einer Lauffläche um seine Drehachse drehbar angebracht werden. Wenn an dem Reifenhalter der Reifen drehbar angebracht ist, kann der Reifen relativ zu dem Rahmen in unterschiedliche Positionen bewegt werden.

Bei den aus dem Stand der Technik bekannten Reifenprüfständen ist eine Abrollflächeneinheit mit einer Abrollfläche vorgesehen, die gegenüber dem Rahmen bewegt werden kann. Die Abrollfläche der Abrollflächeneinheit kann auch als Straßenersatz bezeichnet werden und ist dafür vorgesehen, die Verhältnisse auf einer Straße angenähert nachzubilden.

Wenn der Reifen an dem Reifenhalter drehbar angebracht ist, kann der Reifen in eine Kontaktposition verbracht werden, in der die Lauffläche des Reifens und die Abrollfläche in Kontakt sind. Wenn der Reifen und die Abrollfläche in Kontakt sind und die Abrollfläche gegenüber dem Reifen bewegt wird, kann der Reifen auf der Abrollfläche abrollen.

Aus dem Stand der Technik bekannte Reifenprüfstände sind beispielsweise in DE 10 2009 002169 A1 und in WO 2006/002111 A1 beschrieben. Außerdem ist die Verwendung eines Hexapoden als Aktorsystem zum Belasten von Prüflingen in Prüfständen aus WO 2019/215187 A1 bekannt.

Generell ist es wünschenswert, einen robusten, materialsparenden und ressourcenschonenden Reifenprüfstand mit einem für die Prüfung von Reifen optimalen Bewegungsraum, in dem der Reifen während der Prüfung bewegt werden kann, bereitzustellen, wobei die realen Fahrwerkskinematiken beim Fahren auf einer Straße besonders gut nachgebildet werden.

Es ist daher Aufgabe der vorliegenden Erfindung, einen robusten, materialsparenden und ressourcenschonenden Reifenprüfstand mit einem für die Prüfung von Reifen optimalen Bewegungsraum, in dem der Reifen während der Prüfung bewegt werden kann, bereitzustellen, wobei die realen Fahrwerkskinematiken beim Fahren auf einer Straße besonders gut nachgebildet werden.

Gemäß der Erfindung wird die genannte Aufgabe durch einen Reifenprüfstand mit den Merkmalen des Patentanspruchs 1 gelöst. Der Reifenprüfstand weist einen Rahmen auf. Weiter weist der Reifenprüfstand einen Reifenhalter auf. An dem Reifenhalter kann ein Reifen mit einer Lauffläche um seine Drehachse drehbar angebracht werden. Weiter weist der Reifenprüfstand eine Hexapod-Anordnung mit sechs Linearantriebselementen auf. Jedes der sechs Linearantriebselemente ist mit einem ersten Ende an dem Rahmen und einem zweiten Ende an dem Reifenhalter angebracht. Weiter weist der Reifenprüfstand eine Abrollflächeneinheit mit einer Abrollfläche auf. Die Abrollfläche kann gegenüber dem Rahmen bewegt werden. Weiter kann dann, wenn an dem Reifenhalter der Reifen drehbar angebracht ist, der Reifen durch Einstellen der Linearantriebselemente der Hexapod-Anordnung in eine Kontaktposition verbracht werden. In der Kontaktposition sind die Lauffläche des Reifens und die Abrollfläche in Kontakt. Weiter rollt dann, wenn die Lauffläche und die Abrollfläche in Kontakt sind und die Abrollfläche gegenüber dem Reifen bewegt wird, der Reifen auf der Abrollfläche ab. In einer Ausgangskonfiguration sind eine parallel zur Drehachse verlaufende Tangentialebene an der Lauffläche und eine Tangentialebene an der Abrollfläche identisch. Weiter sind in der Ausgangskonfiguration die Tangentialgeschwindigkeit der Lauffläche und die Tangentialgeschwindigkeit der Abrollfläche an einem Kontaktpunkt zwischen der Lauffläche und der Abrollfläche identisch. Weiter kann jede auf den Reifen wirkende Kraft in eine in den Tangentialebenen und parallel zur Drehachse verlaufende Lateralkraftkomponente, eine in den Tangentialebenen und senkrecht zu der Lateralkraftkomponente verlaufende Tangentialkraftkomponente und eine senkrecht zu den Tangentialebenen verlaufende Radialkraftkomponente aufgeteilt werden. Weiter sind die sechs Linearantriebselemente in der Ausgangskonfiguration derart angeordnet, dass mindestens ein Linearantriebselement der sechs Linearantriebselemente so angeordnet ist, dass dann, wenn das mindestens eine Linearantriebselement eine Kraft auf den Reifen ausübt, die größte Kraftkomponente dieser Kraft in Richtung der Lateralkraftkomponente orientiert ist. Weiter sind die sechs Linearantriebselemente in der Ausgangskonfiguration derart angeordnet, dass mindestens ein Linearantriebselement der sechs Linearantriebselemente so angeordnet ist, dass dann, wenn das mindestens eine Linearantriebselement eine Kraft auf den Reifen ausübt, die größte Kraftkomponente dieser Kraft in Richtung der Tangentialkraftkomponente orientiert ist. Weiter sind die sechs Linearantriebselemente in der Ausgangskonfiguration derart angeordnet, dass mindestens ein Linearantriebselement der sechs Linearantriebselemente so angeordnet ist, dass dann, wenn das mindestens eine Linearantriebselement eine Kraft auf den Reifen ausübt, die größte Kraftkomponente dieser Kraft in Richtung der Radialkraftkomponente orientiert ist.

Der Reifenprüfstand weist den Rahmen auf. An dem Rahmen können verschiedene Komponenten des Reifenprüfstands angebracht sein, wie beispielsweise das erste Ende jedes der sechs Linearantriebselemente. Weiter kann ein Bedienelement zum Bedienen des Reifenprüfstands durch einen Bediener des Reifenprüfstands an dem Rahmen des Reifenprüfstands als Komponente der verschiedenen Komponenten angebracht sein.

Weiter weist der Reifenprüfstand den Reifenhalter auf. An dem Reifenhalter kann der Reifen mit der Lauffläche um seine Drehachse drehbar angebracht werden. An dem Reifenhalter kann also ein Reifen angebracht sein oder kein Reifen angebracht sein. Insbesondere dadurch, dass durch Einstellen der Linearantriebselemente der Reifenhalter relativ zum Rahmen bewegt werden kann und in unterschiedliche Positionen verbracht werden kann, kann ein an dem Reifenhalter angebrachter Reifen durch Einstellen der Linearantriebselemente relativ zum Rahmen bewegt werden und in unterschiedliche Positionen verbracht werden.

Weiter weist der Reifenprüfstand die Hexapod-Anordnung mit den sechs Linearantriebselementen auf. Insbesondere kann jedes Linearantriebselement der sechs Linearantriebselemente in seiner Länge eingestellt werden. Die Hexapod-Anordnung kann als Parallelkinematik bezeichnet werden. Ein Vorteil der Hexapod-Anordnung ist es, dass sie im Vergleich zu herkömmlichen Verstelleinheiten, die als Seriellkinematik ausgebildet sind, bei vergleichsweise geringem Platzbedarf eine hohe Steifigkeit aufweisen kann. Weiter bietet die Hexapod-Anordnung den Vorteil, dass sie im Vergleich zu herkömmlichen Verstelleinheiten, die als Seriellkinematik ausgebildet sind, hohe Stellgenauigkeiten aufweist. Insbesondere kann mithilfe der Hexapod-Anordnung der Reifen mit einer hohen Präzision im Vergleich zu herkömmlichen Verstelleinheiten, die als Seriellkinematik ausgebildet sind, in unterschiedliche Positionen verbracht werden, wie beispielsweise der Kontaktposition. Im Zusammenhang mit der vorliegenden Erfindung hat es sich überraschend herausgestellt, dass die Hexapod-Anordnung, die realen Fahrwerkskinematiken eines Fahrzeugs in einer Prüfumgebung besser als die aus dem Stand der Technik bekannten Reifenprüfstände nachbilden kann.

Jedes der sechs Linearantriebselemente ist mit einem ersten Ende an dem Rahmen und einem zweiten Ende an dem Reifenhalter angebracht. Die sechs Linearantriebselemente können als parallel zueinander zwischen dem Rahmen und dem Reifenhalter wirkend bezeichnet werden, sodass die Hexapod-Anordnung als Parallelkinematik bezeichnet werden kann. Insbesondere kann durch Einstellen der Linearantriebselemente der Reifenhalter relativ zum Rahmen bewegt werden und in unterschiedliche Positionen verbracht werden. Bevorzugt ist jedes Linearantriebselement der sechs Linearantriebselemente mit dem ersten Ende schwenkbar an dem Rahmen und mit dem zweiten Ende schwenkbar an dem Reifenhalter angebracht, sodass jedes Linearantriebselement durch Einstellen der Linearantriebselemente und Verschwenken gegenüber dem Rahmen und dem Reifenhalter unterschiedliche Orientierungen einnehmen kann.

Weiter weist der Reifenprüfstand die Abrollflächeneinheit mit der Abrollfläche auf. Die Abrollfläche kann durch einen ebenen Riemenabschnitt eines Riemens gebildet sein, der zwei an dem Rahmen drehbar gelagerte Riemen zumindest teilweise umschlingt. Bevorzugt erstreckt sich der ebene Riemenabschnitt entlang einer Tangentialebene an dem Riemen, in der ein Kontaktpunkt zwischen der Lauffläche und dem ebenen Riemenabschnitt liegt, wenn an dem Reifenhalter der Reifen drehbar angebracht ist und die Lauffläche des Reifens und der ebene Riemenabschnitt in Kontakt sind. Die Ebenheit des Riemenabschnitts gewährleistet, dass der Reifen auf einer ebenen Abrollfläche abrollen kann. Eine durch den ebenen Riemenabschnitt gebildete ebene Abrollfläche ist insbesondere im Vergleich zu einer durch eine umlaufende Außenfläche der Trommel gekrümmt ausgebildete Abrollfläche vorteilhaft, da der ebene Riemenabschnitt eine reale Straße, insbesondere ihre eben Form, besser als aus dem Stand der Technik bekannte Reifenprüfstände nachbilden kann, insbesondere solche mit einer Abrollfläche, die durch eine umlaufende Außenfläche einer Trommel gebildet ist. Insbesondere hat sich herausgestellt, dass der Rollwiderstand des Reifens beim Abrollen auf dem ebenen Riemenabschnitt im Vergleich zu einer gekrümmten Abrollfläche deutlich reduziert werden konnte. Weiter bietet die Kombination aus Riemen und Umlenkrollen eine platzsparende Bereitstellung einer Abrollfläche im Vergleich zu einer Abrollfläche auf einer zur Reduzierung der Krümmung groß dimensionierten Trommel. Alternativ kann die Abrollfläche eine gekrümmte Abrollfläche sein, die durch eine Innenumfangsfläche einer am Rahmen drehbar gelagerten Trommel gebildet ist. Bevorzugt kann die Trommel mithilfe einer Abrollflächenantriebseinheit drehbar angetrieben werden. Weiter alternativ kann die Abrollfläche eine gekrümmte Abrollfläche sein, die durch eine Außenumfangsfläche einer am Rahmen drehbar gelagerten Trommel gebildet ist. Auch diese Trommel kann bevorzugt mithilfe der Abrollflächenantriebseinheit drehbar angetrieben werden. Die Verwendung einer Umlauffläche einer drehbar gelagerten Trommel als Abrollfläche gewährleistet, dass ein besonders großer Raum für mindestens ein Linearantriebselement, insbesondere ein Lateralantriebselement, bereitgestellt werden kann. Das Bereitstellen eines besonders großen Raumes für mindestens ein Linearantriebselement gewährleistet wiederum, dass ausreichend Bauraum für eine robuste Ausbildung des mindestens einen Linearantriebselements bereitgestellt werden kann.

Die Abrollfläche kann gegenüber dem Rahmen bewegt werden. Hierfür kann die Abrollfläche mithilfe der Abrollflächenantriebseinheit angetrieben werden.

Weiter kann dann, wenn an dem Reifenhalter der Reifen drehbar angebracht ist, der Reifen durch Einstellen der Linearantriebselemente der Hexapod-Anordnung in eine Kontaktposition verbracht werden. Wie bereits beschrieben kann, insbesondere dadurch, dass durch Einstellen der Linearantriebselemente der Reifenhalter relativ zum Rahmen bewegt werden und in unterschiedliche Positionen verbracht werden kann, ein an dem Reifenhalter angebrachter Reifen durch Einstellen der Linearantriebselemente relativ zum Rahmen bewegt werden und in unterschiedliche Positionen verbracht werden. Insbesondere kann der Reifen durch Einstellen der Linearantriebselemente der Hexapod-Anordnung in die Kontaktposition verbracht werden.

In der Kontaktposition sind die Lauffläche des Reifens und die Abrollfläche in Kontakt. Bevorzugt kann der Reifen durch Einstellen der Linearantriebselemente der Hexapod-Anordnung neben der Kontaktposition in weitere Kontaktpositionen verbracht werden, sodass beispielsweise ein Sturz des Reifens, ein Schräglauf des Reifens, eine Reifenlast des Reifens, insbesondere senkrecht zur Tangentialebene an der Abrollfläche, in der der Kontaktpunkt zwischen der Lauffläche und der Abrollfläche liegt, und/oder die Position des Reifens relativ zu der Abrollfläche, insbesondere parallel zur Tangentialebene an der Abrollfläche, in der der Kontaktpunkt zwischen der Lauffläche und der Abrollfläche liegt, und senkrecht zur Abrollflächenumlaufrichtung im Bereich der Abrollfläche und/oder parallel zur Abrollflächenumlaufrichtung im Bereich der Abrollfläche, eingestellt werden kann.

Weiter rollt dann, wenn die Lauffläche und die Abrollfläche in Kontakt sind und die Abrollfläche gegenüber dem Reifen bewegt wird, der Reifen auf der Abrollfläche ab. Bevorzugt bildet der die Abrollfläche eine ebenen Abrollfläche, auf der der Reifen abrollen kann. Alternativ bevorzugt, kann die Abrollfläche auch eine gekrümmte Abrollfläche bilden. Wie bereits beschrieben, kann der Reifen durch Einstellen der Linearantriebselemente der Hexapod-Anordnung neben der Kontaktposition in weitere Kontaktpositionen verbracht werden. Rollt nun der Reifen auf der Abrollfläche ab, kann der Reifen in unterschiedliche Belastungszustände beim Abrollen verbracht werden. Beispielsweise kann beim Abrollen des Reifens auf der Abrollfläche der Sturz des Reifens, der Schräglauf des Reifens, die Reifenlast des Reifens, insbesondere senkrecht zur Tangentialebene an der Abrollfläche, in der der Kontaktpunkt zwischen der Lauffläche und der Abrollfläche liegt, und/oder die Position des Reifens relativ zu der Abrollfläche, insbesondere parallel zur Tangentialebene an der Ablauffläche, in der der Kontaktpunkt zwischen der Lauffläche und der Abrollfläche liegt, und senkrecht zur Abrollflächenumlaufrichtung im Bereich der Abrollfläche und/oder parallel zur Abrollflächenumlaufrichtung im Bereich der Abrollfläche, eingestellt werden.

In einer Ausgangskonfiguration sind eine parallel zur Drehachse verlaufende Tangentialebene an der Lauffläche und eine Tangentialebene an der Abrollfläche identisch. Weiter sind in der Ausgangskonfiguration die Tangentialgeschwindigkeit der Lauffläche und die Tangentialgeschwindigkeit der Abrollfläche an einem Kontaktpunkt zwischen der Lauffläche und der Abrollfläche identisch. Bevorzugt sind in der Ausgangskonfiguration der Lenkwinkel Null und der Sturzwinkel Null. Insbesondere sind bei einem Lenkwinkel ungleich Null und bei einem Sturzwinkel gleich Null die parallel zur Drehachse verlaufende Tangentialebene an der Lauffläche und die Tangentialebene an der Abrollfläche weiterhin identisch. Bevorzugt sind jedoch bei einem Lenkwinkel ungleich Null und bei einem Sturzwinkel gleich Null die Tangentialgeschwindigkeit der Lauffläche und die Tangentialgeschwindigkeit der Abrollfläche an einem Kontaktpunkt zwischen der Lauffläche und der Abrollfläche nicht identisch. Insbesondere wird durch den Reifenprüfstand bei einem Lenkwinkel ungleich Null und einem Sturzwinkel gleich Null eine Konfiguration eingenommen, die nicht der Ausgangskonfiguration entspricht. Weiter sind insbesondere bei einem Sturzwinkel ungleich Null und einem Lenkwinkel gleich Null die parallel zur Drehachse verlaufende Tangentialebene an der Lauffläche und die Tangentialebene an der Abrollfläche nicht identisch. Bevorzugt sind jedoch bei einem Sturzwinkel ungleich Null und einem Lenkwinkel gleich Null die Tangentialgeschwindigkeit der Lauffläche und die Tangentialgeschwindigkeit der Abrollfläche an einem Kontaktpunkt zwischen der Lauffläche und der Abrollfläche identisch. Insbesondere wird durch den Reifenprüfstand bei einem Sturzwinkel ungleich Null und einem Lenkwinkel gleich Null eine Konfiguration eingenommen, die nicht der Ausgangskonfiguration entspricht. Der Kontaktpunkt zwischen der Lauffläche und der Abrollfläche kann auch als Radaufstandspunkt bezeichnet werden.

Weiter kann jede auf den Reifen wirkende Kraft in eine in den Tangentialebenen und parallel zur Drehachse verlaufende Lateralkraftkomponente, eine in den Tangentialebenen und senkrecht zu der Lateralkraftkomponente verlaufende Tangentialkraftkomponente und eine senkrecht zu den Tangentialebenen verlaufende Radialkraftkomponente aufgeteilt werden. Insbesondere sind die Lateralkraftkomponente, die Tangentialkraftkomponente und die Radialkraftkomponente senkrecht zueinander orientiert.

Weiter sind die sechs Linearantriebselemente in der Ausgangskonfiguration derart angeordnet, dass mindestens ein Linearantriebselement der sechs Linearantriebselemente so angeordnet ist, dass dann, wenn das mindestens eine Linearantriebselement eine Kraft auf den Reifen ausübt, die größte Kraftkomponente dieser Kraft in Richtung der Lateralkraftkomponente orientiert ist. Das mindestens eine Linearantriebselement der sechs Linearantriebselemente, das so angeordnet ist, dass dann, wenn das mindestens eine Linearantriebselement eine Kraft auf den Reifen ausübt, die größte Kraftkomponente dieser Kraft in Richtung der Lateralkraftkomponente orientiert ist, kann auch als Lateralantriebselement bezeichnet werden. Bevorzugt weisen die sechs Linearantriebselemente ein Lateralantriebselement auf.

Weiter sind die sechs Linearantriebselemente in der Ausgangskonfiguration derart angeordnet, dass mindestens ein Linearantriebselement der sechs Linearantriebselemente so angeordnet ist, dass dann, wenn das mindestens eine Linearantriebselement eine Kraft auf den Reifen ausübt, die größte Kraftkomponente dieser Kraft in Richtung der Tangentialkraftkomponente orientiert ist. Das mindestens eine Linearantriebselement der sechs Linearantriebselemente, das so angeordnet ist, dass dann, wenn das mindestens eine Linearantriebselement eine Kraft auf den Reifen ausübt, die größte Kraftkomponente dieser Kraft in Richtung der Tangentialkraftkomponente orientiert ist, kann auch als Tangentialantriebselement bezeichnet werden.

Bevorzugt weisen die sechs Linearantriebselemente ein Tangentialantriebselement auf.

Bevorzugt sind das Lateralantriebselement und das Tangentialantriebselement derart an dem Reifenhalter schwenkbar angebracht, dass sich eine erste Gerade, die entlang der Haupterstreckungsrichtung des Lateralantriebselements orientiert ist, und eine zweite Gerade schneiden, die entlang der Haupterstreckungsrichtung des Tangentialantriebselements orientiert ist. Bevorzugt schneiden sich die erste Gerade, die entlang der Haupterstreckungsrichtung des Lateralantriebselements orientiert ist, und die zweite Gerade, die entlang der Haupterstreckungsrichtung des Tangentialantriebselements orientiert ist, in einem Winkel von 90°. Bevorzugt sind das Lateralantriebselement und das Tangentialantriebselement derart an dem Reifenhalter schwenkbar angebracht, dass die Anbringungspunkte weniger als eine Breite der Abrollfläche senkrecht zur Abrollflächenumlaufrichtung von dem Kontaktpunkt zwischen der Lauffläche und dem ebenen Riemenabschnitt angeordnet sind.

Weiter sind die sechs Linearantriebselemente in der Ausgangskonfiguration derart angeordnet, dass mindestens ein Linearantriebselement der sechs Linearantriebselemente so angeordnet ist, dass dann, wenn das mindestens eine Linearantriebselement eine Kraft auf den Reifen ausübt, die größte Kraftkomponente dieser Kraft in Richtung der Radialkraftkomponente orientiert ist. Das mindestens eine Linearantriebselement der sechs Linearantriebselemente, das so angeordnet ist, dass dann, wenn das mindestens eine Linearantriebselement eine Kraft auf den Reifen ausübt, die größte Kraftkomponente dieser Kraft in Richtung der Radialkraftkomponente orientiert ist, kann auch als Radialantriebselement bezeichnet werden.

Zusammenfassend kann also festgestellt werden, dass der Reifenprüfstand mindestens ein Lateralantriebselement, mindestens ein Tangentialantriebselement und mindestens ein Radialantriebselement aufweist. Jedes dieser Linearantriebselemente ist so ausgelegt, dass es eine bestimmte und insbesondere sich von den anderen Linearantriebselementen unterscheidende Funktion erfüllt, bezogen auf die Lateralkraftkomponente, die Tangentialkraftkomponente und die Radialkraftkomponente. Das Lateralantriebselement ist nämlich so ausgelegt, dass dann, wenn das mindestens eine Linearantriebselement eine Kraft auf den Reifen ausübt, die größte Kraftkomponente dieser Kraft in Richtung der Lateralkraftkomponente orientiert ist, das Tangentialantriebselement ist so ausgelegt, dass dann, wenn das mindestens eine Linearantriebselement eine Kraft auf den Reifen ausübt, die größte Kraftkomponente dieser Kraft in Richtung der Tangentialkraft-komponente orientiert ist und das Radialantriebselement ist so ausgelegt, dass dann, wenn das mindestens eine Linearantriebselement eine Kraft auf den Reifen ausübt, die größte Kraftkomponente dieser Kraft in Richtung der Radialkraftkomponente orientiert ist.

Bei den aus dem Stand der Technik bekannten Hexapod-Anordnungen sind die sechs Linearantriebselemente, insbesondere aufgrund des symmetrischen Aufbaus dieser Hexapod-Anordnungen, nicht derart ausgelegt, dass jedes von drei Linearantriebselementen der sechs Linearantriebselemente eine bestimmte und sich von den Funktionen der anderen Linearantriebselementen der drei Linearantriebselemente unterscheidende Funktion erfüllen kann, insbesondere bezogen auf die Lateralkraftkomponente, die Tangentialkraftkomponente und die Radialkraftkomponente. Die aus dem Stand der Technik bekannten Hexapod-Anordnungen weisen identisch ausgebildete Linearantriebselemente auf, die beispielsweise dieselben Längen aufweisen, zueinander symmetrisch angeordnet sind, dieselben Winkel zueinander bilden und für dieselben Kräfte ausgelegt sind. Im Prinzip können die aus dem Stand der Technik bekannten Hexapod-Anordnungen ebenfalls in Reifenprüfständen verwendet werden, da sie ebenfalls eine Auf- und Abwärtsbewegung, eine seitliche Bewegung und eine Winkelbewegung des Reifenhalters ermöglichen würden. Jedoch müssten die aus dem Stand der Technik bekannten Hexapod-Anordnungen im Vergleich zu dem erfindungsgemäßen Reifenprüfstand massiver ausgebildet sein, um dieselben Kräfte während der Prüfung auf einen Reifen an dem Reifenhalter ausüben zu können. Die Verwendung des mindestens einen Lateralantriebselements, des mindestens einen Tangentialantriebselements und des mindestens einen Radialantriebselements ermöglicht somit einen besonders materialsparenden und ressourcenschonenden Reifenprüfstand. Aufgrund der Verwendung des mindestens einen Lateralantriebselements, des mindestens einen Tangentialantriebselements und des mindestens einen Radialantriebselements ist es möglich, das Lateralantriebselement, das Tangentialantriebselement und das Radialantriebselement unterschiedlich auszubilden, sodass, beispielsweise, je nachdem, welche Verstelllängen für die Positionierung des Reifens erwünscht sind, sich die Verstelllängen des mindestens einen Lateralantriebselements, des mindestens einen Tangentialantriebselements und des mindestens einen Radialantriebselements unterscheiden können. Beispielsweise könnte somit die erfindungsgemäße Hexapod-Anordnung darauf ausgelegt werden, dass eine Schräglaufverstellung größer als eine Sturzverstellung ist oder, dass eine Radzustellung größer als eine Lateralverstellung oder Tangentialverstellung ist. Somit kann ein Reifenprüfstand mit einem für die Prüfung von Reifen optimalem Bewegungsraum, in dem der Reifen während der Prüfung bewegt werden kann, bereitgestellt werden. Weiter können das mindestens eine Lateralantriebselement, das mindestens eine Tangentialantriebselement und das mindestens eine Radialantriebselement auf die bei der Prüfung des Reifens zu erwartenden Lateralkraftkomponente, Tangentialkraftkomponente und Radialkraftkomponente ausgelegt werden, was insbesondere einen materialsparenden und ressourcenschonenden Reifenprüfstand ermöglicht.

Insbesondere hat sich im Zusammenhang mit der vorliegenden Erfindung herausgestellt, dass die Kombination aus mindestens einem Lateralantriebselement, mindestens einem Tangentialantriebselement und mindestens einem Radialantriebselement den Bewegungsraum, in dem der Reifen während der Prüfung bewegt werden kann, insbesondere im Vergleich zu einem Bewegungsraum bei einer möglichen Verwendung einer aus dem Stand der Technik bekannten Hexapod-Anordnung, deutlich vergrößert werden kann, ohne, dass die Hexapod-Anordnung dabei in Bewegungssingularitäten kommt, in denen ein Verstellen der Linearantriebselemente nicht zu der gewünschten Bewegung des Reifenhalters führt, sodass ein robuster Reifenprüfstand bereitgestellt wird.

Weiter hat sich im Zusammenhang mit der vorliegenden Erfindung ergeben, dass die Kombination aus mindestens einem Lateralantriebselement, mindestens einem Tangentialantriebselement und mindestens einem Radialantriebselement die realen Fahrwerkskinematiken beim Fahren auf einer Straße besonders gut nachbilden kann.

Zusammenfassend kann also festgestellt werden, dass mit der vorliegenden Erfindung ein robuster, materialsparender und ressourcenschonender Reifenprüfstand mit einem für die Prüfung von Reifen optimalen Bewegungsraum, in dem der Reifen während der Prüfung bewegt werden kann, bereitgestellt wird, wobei die realen Fahrwerkskinematiken beim Fahren auf einer Straße besonders gut nachgebildet werden.

In einer Ausführungsform, ist dann, wenn an dem Reifenhalter der Reifen drehbar angebracht ist und dieser in der Kontaktposition ist, das mindestens eine Linearantriebselement, das so angeordnet ist, dass dann, wenn das mindestens eine Linearantriebselement eine Kraft auf den Reifen ausübt, die größte Kraftkomponente dieser Kraft in Richtung der Lateralkraftkomponente orientiert ist, in einer Richtung angeordnet, die parallel zu der Richtung der Radialkraftkomponente verläuft. Insbesondere ist somit die Lateralantriebselement in einer Richtung angeordnet, die parallel zu der Richtung der Radialkraftkomponente verläuft. Eine Anordnung des Lateralantriebselements in der Richtung, die parallel zu der Richtung der Radialkraftkomponente verläuft ermöglicht eine Anordnung des Lateralantriebselements in der Nähe des Kontaktpunkts zwischen der Lauffläche und Abrollfläche. Eine Anordnung des Lateralantriebselements in der Nähe des Kontaktpunkts zwischen der Lauffläche und Abrollfläche ist besonders bei großen Sturzwinkeln, insbesondere beim Prüfen von Motorradreifen, vorteilhaft, da diese Anordnung einen optimalen und direkten Kraftfluss des Lateralantriebselements gewährleistet.

In einer Ausführungsform sind zwei Linearantriebselemente der sechs Linearantriebselemente jeweils so angeordnet, dass dann, wenn die zwei Linearantriebselemente Kräfte auf den Reifen ausüben, die größte Kraftkomponente dieser Kräfte in Richtung der Radialkraftkomponente orientiert ist. Bevorzugt weisen die sechs Linearantriebselemente demnach zwei Radialantriebselemente auf. Insbesondere sind die Radialantriebselemente so angeordnet, dass der Reifen mittig zwischen den Radialantriebselementen angeordnet ist. Bevorzugt sind die zwei Radialantriebselemente symmetrisch bezogen auf den Kontaktpunkt zwischen der Lauffläche und der Abrollfläche angeordnet. Insbesondere kann durch eine symmetrische Anordnung der zwei Radialantriebselemente bezogen auf den Kontaktpunkt zwischen der Lauffläche und der Abrollfläche durch die Radialkraftkomponente hervorgerufene Biegemomente verringert oder sogar komplett vermieden werden. Bevorzugt ist jedes der Radialantriebselemente mit seinem ersten Ende schwenkbar an dem Rahmen angebracht. Bevorzugt verlaufen die beiden Schwenkachsen hierbei entlang derselben Gerade, auf der auch der Kontaktpunkt angeordnet ist. Hierdurch können bei einer Verstellung des Reifens in unterschiedliche Kontaktpositionen, die entlang der Radialantriebselemente verlaufende Reifenlastvektoren annähernd den gleichen Abstand zu dem Kontaktpunkt beibehalten. Weiter sind die Radialantriebselemente mit den zweiten Enden schwenkbar an dem Reifenhalter angebracht, wobei die beiden Schwenkachsen entlang derselben Gerade verlaufen. Bevorzugt sind die zwei Radialantriebselemente in der Ausgangskonfiguration senkrecht zu den Tangentialebenen ausgerichtet und parallel zueinander ausgerichtet. Weiter bevorzugt erstrecken sich die zwei Radialantriebselemente in der Ausgangskonfiguration in einem Winkel zueinander von dem Abschnitt des Reifenhalters zu den Tangentialebenen hin, wobei der Abstand zwischen den zwei Radialantriebselementen von dem Abschnitt des Reifenhalters zu den Tangentialebenen hin zunimmt. Wenn sich die zwei Radialantriebselemente in der Ausgangskonfiguration in einem Winkel zueinander von dem Abschnitt des Reifenhalters zu den Tangentialebenen hin erstrecken, wobei der Abstand zwischen den zwei Radialantriebselementen von dem Abschnitt des Reifenhalters zu den Tangentialebenen hin zunimmt, ist der Reifenprüfstand besonders steif ausgebildet.

In einer Ausführungsform ist dann, wenn an dem Reifenhalter der Reifen drehbar angebracht ist, der Reifen in der Kontaktposition zwischen den zwei Linearantriebselementen angeordnet, die jeweils so angeordnet sind, dass dann, wenn die zwei Linearantriebselemente jeweils eine Kraft auf den Reifen ausüben, die größte Kraftkomponente jeder dieser Kräfte in Richtung der Radialkraftkomponente orientiert ist. Demnach ist der Reifen in der Kontaktposition bevorzugt zwischen den zwei Radialantriebselementen angeordnet. Insbesondere sind die Radialantriebselemente so angeordnet, dass der Reifen mittig zwischen den Radialantriebselementen angeordnet ist. Bevorzugt sind die zwei Radialantriebselemente symmetrisch bezogen auf den Kontaktpunkt zwischen der Lauffläche und der Abrollfläche angeordnet. Insbesondere kann durch eine symmetrische Anordnung der zwei Radialantriebselemente bezogen auf den Kontaktpunkt zwischen der Lauffläche und der Abrollfläche durch die Radialkraftkomponente hervorgerufene Biegemomente verringert oder sogar komplett vermieden werden.

In einer Ausführungsform sind die zwei Linearantriebselemente, die jeweils so angeordnet sind, dass dann, wenn die zwei Linearantriebselemente jeweils eine Kraft auf den Reifen ausüben, die größte Kraftkomponente jeder dieser Kräfte in Richtung der Radialkraftkomponente orientiert ist, in der Ausgangskonfiguration in Drehachsenrichtung zueinander versetzt angeordnet. Eine in Drehachsenrichtung (in Richtung der Drehachse des Reifens in der Ausgangskonfiguration) zueinander versetzte Anordnung der Radialantriebselemente in der Ausgangskonfiguration ist besonders dann vorteilhaft, wenn der Reifenprüfstand horizontal angeordnet ist, d.h., wenn der Reifenhalter horizontal neben der Abrollflächeneinheit angeordnet ist. Dadurch, dass die Radialantriebselemente in der Ausgangskonfiguration in Drehachsenrichtung zueinander versetzt angeordnet sind, kann beispielsweise der Reifen von oben zu dem Reifenhalter und von diesem nach oben weg verbracht werden kann. Dadurch, dass die Radialantriebselemente in der Ausgangskonfiguration in Richtung der Drehachse zueinander versetzt angeordnet sein können, können insbesondere schwere Reifen mit einem Kran an den Reifenprüfstand angebracht werden und von diesem entfernt werden.

In einer Ausführungsform ist mindestens ein Linearantriebselement der sechs Linearantriebselemente in der Ausgangskonfiguration so angeordnet, dass durch Einstellen des mindestens einen Linearantriebselements der Reifen aus seiner Orientierung in der Ausgangskonfiguration um eine Horizontalachse und eine Vertikalachse verschwenkt werden kann. Das mindestens eine Linearantriebselement der sechs Linearantriebselemente, das in der Ausgangskonfiguration so angeordnet ist, dass durch Einstellen des mindestens einen Linearantriebselements der Reifen aus seiner Orientierung in der Ausgangskonfiguration um eine Horizontalachse und eine Vertikalachse verschwenkt werden kann, kann auch als Lenk-/Sturzantriebselement bezeichnet werden. Bevorzugt ist das Lenk-/Sturzantriebselement mit dem ersten Ende schwenkbar an dem Rahmen und mit dem zweiten Ende schwenkbar an dem Reifenhalter angebracht. Bevorzugt ist das mindestens eine Lenk-/Sturzantriebselement derart an dem Reifenhalter schwenkbar angebracht, dass der Anbringungspunkt weiter von dem Kontaktpunkt zwischen der Lauffläche und der Abrollfläche entfernt angeordnet ist, als dies die Anbringungspunkte des Lateralantriebselements und des Tangentialantriebselements sind, insbesondere weiter von dem Kontaktpunkt zwischen der Lauffläche und der Abrollfläche entfernt angeordnet als die Länge des mindestens einen Radialantriebselements in der Ausgangskonfiguration. Ein von dem Kontaktpunkt zwischen der Lauffläche und der Abrollfläche entfernt angeordneter Anbringungspunkt des mindestens einen Lenk-/Sturzantriebselements an dem Reifenhalter gewährleistete, dass eine vergleichsweise geringe Kraft von dem mindestens einen Lenk-/Sturzantriebselement auf den Reifen ausgeübt werden muss, um diesen um die Horizontalachse und die Vertikalachse zu verschwenken.

In einer Ausführungsform sind zwei Linearantriebselemente der sechs Linearantriebselemente jeweils in der Ausgangskonfiguration so angeordnet, dass durch Einstellen der zwei Linearantriebselemente der Reifen aus seiner Orientierung in der Ausgangskonfiguration um eine Horizontalachse und eine Vertikalachse verschwenkt werden kann. Die zwei Linearantriebselemente der sechs Linearantriebselemente, die in der Ausgangskonfiguration so angeordnet sind, dass durch Einstellen der zwei Linearantriebselemente der Reifen aus seiner Orientierung in der Ausgangskonfiguration um eine Horizontalachse und eine Vertikalachse verschwenkt werden kann, können auch als Lenk-/Sturzantriebselement bezeichnet werden.

In einer Ausführungsform weist der Reifenhalter einen schwenkbar am Rahmen angebrachten ersten Schwenkarm auf, an dem ein zweites Ende eines ersten Linearantriebselements des mindestens einen Linearantriebselements schwenkbar angebracht ist, das in der Ausgangskonfiguration so angeordnet ist, dass durch Einstellen des Linearantriebselements der Reifen aus seiner Orientierung in der Ausgangskonfiguration um eine Horizontalachse und eine Vertikalachse verschwenkt werden kann. Der Reifenhalter weist also einen schwenkbar am Rahmen angebrachten ersten Schwenkarm auf, an dem das zweite Ende eines ersten Lenk-/Sturzantriebselements schwenkbar angebracht ist. Dadurch, dass der Reifenhalter einen schwenkbar am Rahmen angebrachten ersten Schwenkarm aufweist, an dem das zweite Ende des ersten Lenk-/Sturzantriebselements schwenkbar angebracht ist, kann das erste Lenk-/Sturzantriebselement kürzer ausgebildet sein, da mithilfe des ersten Schwenkarms gewährleistet werden kann, dass eine vergleichsweise geringe Kraft von dem ersten Lenk-/Sturzantriebselement auf den Reifen ausgeübt werden muss, um diesen um die Horizontalachse und die Vertikalachse zu verschwenken. Bevorzugt weist der Reifenhalter eine schwenkbar an dem ersten Schwenkarm angebrachte erste Koppelstange auf. Insbesondere kann die erste Koppelstange an einem Abschnitt des Reifenhalters schwenkbar angebracht sein. Bevorzugt ist an dem ersten Schwenkarm das zweite Ende des ersten Lenk-/Sturzantriebselements schwenkbar angebracht.

In einer Ausführungsform weist der Reifenhalter einen schwenkbar am Rahmen angebrachten zweiten Schwenkarm auf, an dem ein zweites Ende eines zweiten Linearantriebselements des mindestens einen Linearantriebselements schwenkbar angebracht ist, das in der Ausgangskonfiguration so angeordnet ist, dass durch Einstellen des Linearantriebselements der Reifen aus seiner Orientierung in der Ausgangskonfiguration um eine Horizontalachse und eine Vertikalachse verschwenkt werden kann. Der Reifenhalter weist also einen schwenkbar am Rahmen angebrachten zweiten Schwenkarm auf, an dem das zweite Ende eines zweiten Lenk-/Sturzantriebselements schwenkbar angebracht ist. Dadurch, dass der Reifenhalter einen schwenkbar am Rahmen angebrachten zweiten Schwenkarm aufweist, an dem das zweite Ende des zweiten Lenk-/Sturzantriebselements schwenkbar angebracht ist, kann das zweite Lenk-/Sturzantriebselement kürzer ausgebildet sein, da mithilfe des zweiten Schwenkarms gewährleistet werden kann, dass eine vergleichsweise geringe Kraft von dem zweiten Lenk-/Sturzantriebselement auf den Reifen ausgeübt werden muss, um diesen um die Horizontalachse und die Vertikalachse zu verschwenken. Bevorzugt weist der Reifenhalter eine schwenkbar an dem zweiten Schwenkarm angebrachte zweite Koppelstange auf. Insbesondere kann die zweite Koppelstange an einem Abschnitt des Reifenhalters schwenkbar angebracht sein. Bevorzugt ist an dem zweiten Schwenkarm das zweite Ende des zweiten Lenk-/Sturzantriebselements schwenkbar angebracht.

Bevorzugt sind die erste Koppelstage und die zweite Koppelstange parallel zueinander angeordnet. Besonders bevorzugt erstrecken sich die erste Koppelstange und die zweite Koppelstange in einem Winkel zueinander von dem Abschnitt des Reifenhalters zu dem ersten Schwenkarm bzw. zu dem zweiten Schwenkarm hin, wobei der Abstand zwischen der ersten Koppelstange und der zweiten Koppelstange von dem Abschnitt des Reifenhalters zu dem ersten Schwenkarm bzw. zu dem zweiten Schwenkarm hin zunimmt. Durch diese Erstreckung der ersten Koppelstange und der zweiten Koppelstange in einem Winkel zueinander wird ein besonders steifer Reifenprüfstand bereitgestellt.

Bevorzugt sind das erste Radialantriebselement und die erste Koppelstange derart an dem Reifenhalter schwenkbar angebracht, dass sich eine erste Gerade, die entlang der Haupterstreckungsrichtung des ersten Radialantriebselements orientiert ist, und eine zweite Gerade schneiden, die entlang der Haupterstreckungsrichtung der ersten Koppelstange orientiert ist. Weiter bevorzugt sind das zweite Radialantriebselement und die zweite Koppelstange derart an dem Reifenhalter schwenkbar angebracht, dass sich eine erste Gerade, die entlang der Haupterstreckungsrichtung des zweiten Radialantriebselements orientiert ist, und eine zweite Gerade schneiden, die entlang der Haupterstreckungsrichtung der zweiten Koppelstange orientiert ist. Hierdurch wird ein vergleichsweise großer und stabiler Arbeitsbereich für die Verstellung des Reifens bereitgestellt.

Erfindungsgemäß weist der Reifenhalter einen am Rahmen befestigten Rahmenabschnitt und einen Reifenabschnitt auf, an dem der Reifen drehbar angebracht werden kann, wobei der Rahmenabschnitt und der Reifenabschnitt über eine Kraftmesseinheit verbunden sind, wobei die Kraftmesseinheit mindestens ein Lateralkraftmesselement, das sich in Richtung der Lateralkraftkomponente erstreckt, mindestens ein Tangentialkraftmesselement, das sich in Richtung der Tangentialkraftkomponente erstreckt, und mindestens ein Radialkraftmesselement aufweist, das sich in Richtung der Radialkraftkomponente erstreckt, wenn der Reifenprüfstand in der Ausgangskonfiguration ist. Durch die Erstreckung des mindestens einen Lateralkraftmesselements in Richtung der Lateralkraftkomponente, die Erstreckung des mindestens einen Tangentialkraftmesselements in Richtung der Tangentialkraftkomponente und des mindestens einen Radialkraftmesselements in Richtung der Radialkraftkomponente, gewährleistet eine präzise Erfassung der unterschiedlichen Kraftkomponenten, bevorzugt unabhängig voneinander.

In einer Ausführungsform ist wenigstens eines der Linearantriebselemente der Hexapod-Anordnung als Hydraulikzylinder ausgebildet. Die Ausbildung wenigstens eines der Linearantriebselemente der Hexapod-Anordnung als Hydraulikzylinder gewährleistet, dass vergleichsweise hohe Kräfte übertragen werden können. Weiter gewährleistet die Ausbildung wenigstens eines der Linearantriebselemente der Hexapod-Anordnung als Hydraulikzylinder gleichförmige und exakte Einstellbewegungen. Insbesondere kann durch die Ausbildung wenigstens eines der Linearantriebselemente der Hexapod-Anordnung als Hydraulikzylinder die Stellgenauigkeit der Hexapod-Anordnung erhöht werden. Besonders bevorzugt ist jedes der Linearantriebselemente der Hexapod-Anordnung als Hydraulikzylinder ausgebildet. Die für das wenigstens eine Linearantriebselement genannten Vorteile gelten entsprechend für jedes der Linearantriebselemente.

In einer Ausführungsform ist wenigstens eines der Linearantriebselemente der Hexapod-Anordnung als elektromechanischer Linearantrieb ausgebildet. Die Ausbildung wenigstens eines der Linearantriebselemente der Hexapod-Anordnung als elektromechanischer Linearantrieb gewährleistet vergleichsweise hohe Einstellgeschwindigkeiten und hohe Einstellbeschleunigungen zum Einstellen der Linearantriebselemente. Weiter gewährleistet die Ausbildung wenigstens eines der Linearantriebselemente der Hexapod-Anordnung als elektromechanischer Linearantrieb gleichförmige und exakte Einstellbewegungen. Insbesondere kann durch die Ausbildung wenigstens eines der Linearantriebselemente der Hexapod-Anordnung als elektromechanischer Linearantrieb die Stellgenauigkeit der Hexapod-Anordnung erhöht werden. Besonders bevorzugt ist jedes der Linearantriebselemente der Hexapod-Anordnung als elektromechanischer Linearantrieb ausgebildet. Die für das wenigstens eine Linearantriebselement genannten Vorteile gelten entsprechend für jedes der Linearantriebselemente.

In einer Ausführungsform weist der Reifenprüfstand eine Reifenantriebseinheit auf, die dann, wenn an dem Reifenhalter der Reifen drehbar angebracht ist, diesen in einer Reifenumlaufrichtung antreiben kann. Mithilfe der Reifenantriebseinheit kann der Reifen in Reifenumlaufrichtung angetrieben werden und so in eine Drehbewegung um seine Drehachse versetzt werden. Weiter kann mithilfe der Reifenantriebseinheit der Reifen beim Abrollen auf dem ebenen Riemenabschnitt in Reifenumlaufrichtung beschleunigt werden, sodass der Reifen in einen weiteren Belastungszustand verbracht werden kann. Für den Fall, dass der Reifenprüfstand keine Riemenantriebseinheit aufweist, kann durch Antreiben des Reifens in der Reifenumlaufrichtung und Kontakt zwischen der Lauffläche und dem ebenen Riemenabschnitt der Riemen in der Riemenumlaufrichtung angetrieben werden.

In einer Ausführungsform weist der Reifenprüfstand eine Reifenabbremseinheit auf, die dann, wenn an dem Reifenhalter der Reifen drehbar angebracht ist, diesen in einer Reifenumlaufrichtung abbremsen kann. Mithilfe der Reifenabbremseinheit kann der Reifen in Reifenumlaufrichtung abgebremst werden und so die Drehbewegung um seine Drehachse verlangsamt werden. Die Drehgeschwindigkeit des Reifens kann mithilfe der Reifenabbremseinheit in der Reifenumlaufrichtung verringert werden. Weiter kann mithilfe der Reifenabbremseinheit der Reifen beim Abrollen auf dem ebenen Riemenabschnitt in Reifenumlaufrichtung abgebremst werden, sodass der Reifen in einen weiteren Belastungszustand verbracht werden kann.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figuren 1 und 2: zeigen jeweils eine schematische Ansicht einer ersten Ausführungsform eines erfindungsgemäßen Reifenprüfstands,
- Figur 3: zeigt zwei schematische Ansichten eines Rahmenabschnitt, eines Reifenabschnitt sowie einer Kraftmesseinheit der ersten Ausführungsform des erfindungsgemäßen Reifenprüfstands,
- Figuren 4 und 5: zeigen jeweils eine schematische Ansicht einer zweiten Ausführungsform des erfindungsgemäßen Reifenprüfstands,
- Figuren 6 und 7: zeigen jeweils eine schematische Ansicht einer dritten Ausführungsform des erfindungsgemäßen Reifenprüfstands, und
- Figur 8: zeigt zwei schematische Ansichten einer vierten Ausführungsform des erfindungsgemäßen Reifenprüfstands.

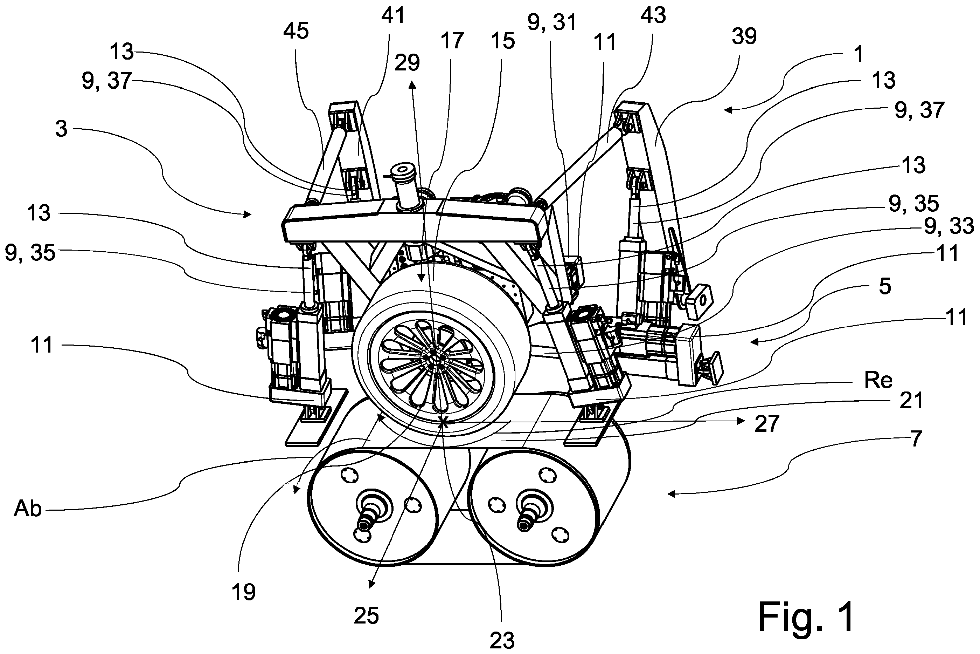

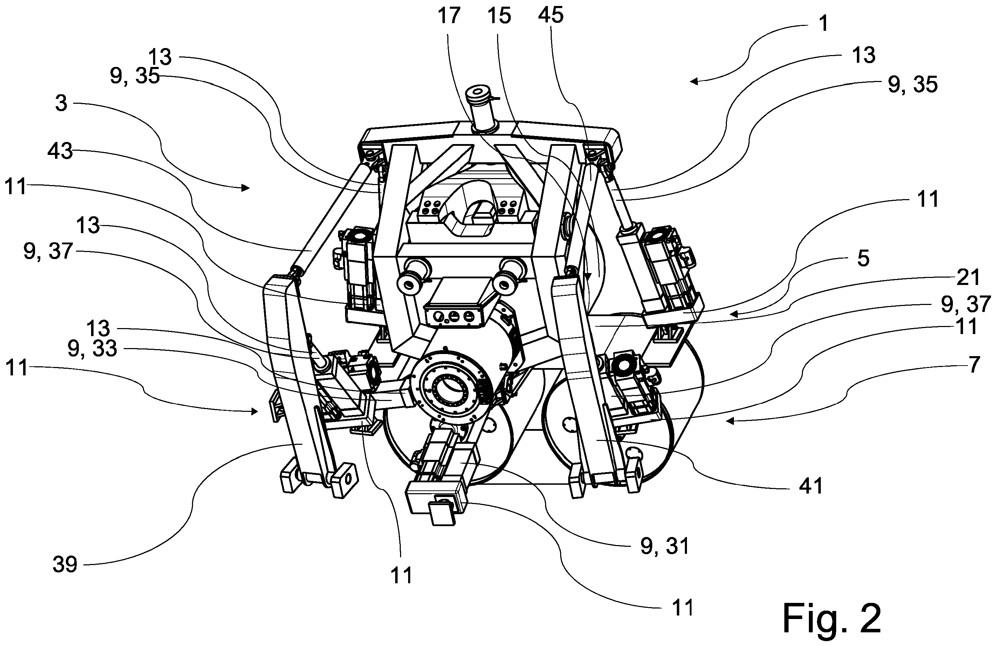

In den Figuren 1 und 2 ist jeweils eine schematische Ansicht einer ersten Ausführungsform eines erfindungsgemäßen Reifenprüfstands 1 dargestellt. Der Reifenprüfstand 1 weist einen in den Figuren 1 und 2 nicht dargestellten Rahmen, einen Reifenhalter 3, eine Hexapod-Anordnung 5 und eine Abrollflächeneinheit 7 auf. Weiter weist der Reifenprüfstand 1 eine in den Figuren 1 und 2 nicht dargestellte Reifenantriebseinheit, eine in den Figuren 1 und 2 ebenfalls nicht dargestellte Reifenabbremseinheit und eine in den Figuren 1 und 2 ebenfalls nicht dargestellte Abrollflächenantriebseinheit auf.

Die Hexapod-Anordnung 5 weist sechs Linearantriebselemente 9 auf. Jedes der sechs Linearantriebselemente 9 weist ein erstes Ende 11 und ein zweites Ende 13 auf. Jedes der sechs Linearantriebselemente 9 ist mit dem ersten Ende 11 an dem Rahmen und mit dem zweiten Ende 13 an dem Reifenhalter 3 angebracht. In der in den Figuren 1 und 2 dargestellten ersten Ausführungsform des erfindungsgemäßen Reifenprüfstands 1 ist jedes der sechs Linearantriebselemente 9 der Hexapod-Anordnung 5 als elektromechanischer Linearantrieb ausgebildet. Alternativ kann durch Umrüsten auch jedes der sechs Linearantriebselemente 9 der Hexapod-Anordnung 5 als Hydraulikzylinder ausgebildet sein.

Weiter ist in den Figuren 1 und 2 ein Reifen 15 mit einer Lauffläche 17 dargestellt. Der Reifen 15 ist um seine Drehachse 19 drehbar an dem Reifenhalter 3 angebracht. Die Reifenantriebseinheit kann den an dem Reifenhalter 3 drehbar angebrachten Reifen 15 in einer Reifenumlaufrichtung Re antreiben. Die Reifenabbremseinheit kann den an dem Reifenhalter 3 drehbar angebrachten Reifen 15 in der Reifenumlaufrichtung Re abbremsen, d.h., die Drehgeschwindigkeit des Reifens 15 in der Reifenumlaufrichtung Re verringern.

Wie bereits erwähnt, weist der Reifenprüfstand 1 die Abrollflächeneinheit 7 auf. Die Abrollflächeneinheit 7 weist eine ebene Abrollfläche 21 auf. Die Abrollfläche 21 kann gegenüber dem Rahmen bewegt werden. Der an dem Reifenhalter 3 drehbar angebrachte Reifen 15 kann durch Einstellen der Linearantriebselemente 9 der Hexapod-Anordnung 5 in eine Kontaktposition verbracht werden, die in den Figuren 1 und 2 dargestellt ist und in der die Lauffläche 17 des Reifens 15 und die Abrollfläche 21 in Kontakt sind.

Wie bereits beschrieben, weist der Reifenprüfstand 1 die Reifenantriebseinheit auf. Die Reifenantriebseinheit kann den an dem Reifenhalter 3 drehbar angebrachten Reifen 15 in der Reifenumlaufrichtung Re antreiben. Die Abrollflächenantriebseinheit kann die Abrollfläche 21 in einer Abrollflächenumlaufrichtung Ab antreiben. Wenn nun die Lauffläche 17 und die Abrollfläche 21 in Kontakt sind und die Abrollfläche 21 gegenüber dem Reifen 15 bewegt wird, rollt der Reifen 15 auf der Abrollfläche 21 ab.

In der in den Figuren 1 und 2 dargestellten ersten Ausführungsform kann der Reifen 15 in Bezug zu der Abrollfläche 21 mithilfe der Hexapod-Anordnung 5 positioniert werden. Insbesondere kann der Reifen 15 durch Einstellen der Linearantriebselemente 9 der Hexapod-Anordnung 5 in die Kontaktposition verbracht werden, in der die Lauffläche 17 des Reifens 15 mit der Abrollfläche 21 in Kontakt ist. Weiter kann der Reifen 15 durch Einstellen der Linearantriebselemente 9 der Hexapod-Anordnung 5 neben der in den Figuren 1 und 2 dargestellten Kontaktposition in weitere Kontaktpositionen verbracht werden, in der die Lauffläche 17 des Reifens 15 ebenfalls mit der Abrollfläche 21 in Kontakt ist. Rollt nun der Reifen 15 auf der Abrollfläche 21 ab, wird der Reifen 15 beim Abrollen in unterschiedliche Belastungszustände verbracht. Durch Einstellen der Linearantriebselemente 9 beim Abrollen des Reifens 15 auf der Abrollfläche 21 kann beispielsweise der Sturz des Reifens 15, der Schräglauf des Reifens 15, die Reifenlast des Reifens 15, und/oder die Position des Reifens 15 relativ zu der Abrollfläche 21 eingestellt werden. Außerdem kann mithilfe der Reifenantriebseinheit der Reifen 15 in der Reifenumlaufrichtung Re angetrieben werden oder mithilfe der Reifenabbremseinheit in der Reifenumlaufrichtung Re abgebremst werden. Hierdurch kann der Reifen 15 beim Abrollen in unterschiedliche Belastungszustände verbracht werden.

In den Figuren 1 und 2 ist der Reifenprüfstand 1 in einer Ausgangskonfiguration dargestellt. In dieser Ausgangskonfiguration sind eine parallel zur Drehachse 19 verlaufende Tangentialebene an der Lauffläche 17 und eine Tangentialebene an der Abrollfläche 21 identisch. Insbesondere befindet sich ein Kontaktpunkt 23 zwischen der Lauffläche 17 und der Abrollfläche 21 in beiden Tangentialebenen. Weiter sind in der Ausgangskonfiguration die Tangentialgeschwindigkeit der Lauffläche 17 und die Tangentialgeschwindigkeit der Abrollfläche 21 an dem Kontaktpunkt 23 zwischen der Lauffläche 17 und der Abrollfläche 21 identisch. Jede auf den Reifen 15 wirkende Kraft kann in eine Lateralkraftkomponente 25, eine Tangentialkraftkomponente 27 und eine Radialkraftkomponente 29 aufgeteilt werden. Die Lateralkraftkomponente 25 verläuft in den Tangentialebenen und parallel zur Drehachse 19. Die Tangentialkraftkomponente 27 verläuft in den Tangentialebenen und senkrecht zu der Lateralkraftkomponente 25. Die Radialkraftkomponente 29 verläuft senkrecht zu den Tangentialebenen.

Die vorliegende Erfindung ist insbesondere durch die Konfiguration der sechs Linearantriebselemente 9 gegenüber dem Stand der Technik vorteilhaft, da die sechs Linearantriebselemente 9 nicht wie bei aus dem Stand der Technik bekannten Hexapod-Anordnungen symmetrisch zueinander angeordnet sind.

In der in den Figuren 1 und 2 dargestellten Ausgangskonfiguration sind nämlich die sechs Linearantriebselemente 9 derart angeordnet, dass ein Linearantriebselement 9 der sechs Linearantriebselemente 9 so angeordnet ist, dass dann, wenn das eine Linearantriebselement 9 eine Kraft auf den Reifen 15 ausübt, die größte Kraftkomponente dieser Kraft in Richtung der Lateralkraftkomponente 25 orientiert ist. Dieses Linearantriebselement 9 kann auch als Lateralantriebselement 31 bezeichnet werden.

Weiter sind in der in den Figuren 1 und 2 dargestellten Ausgangskonfiguration die sechs Linearantriebselemente 9 derart angeordnet, dass ein Linearantriebselement 9 der sechs Linearantriebselemente 9 so angeordnet ist, dass dann, wenn das eine Linearantriebselement 9 eine Kraft auf den Reifen 15 ausübt, die größte Kraftkomponente dieser Kraft in Richtung der Tangentialkraftkomponente 27 orientiert ist. Dieses Linearantriebselement 9 kann auch als Tangentialantriebselement 33 bezeichnet werden.

Weiter sind in der in den Figuren 1 und 2 dargestellten Ausgangskonfiguration die sechs Linearantriebselemente 9 derart angeordnet, dass zwei Linearantriebselemente 9 der sechs Linearantriebselemente 9 jeweils so angeordnet sind, dass dann, wenn die zwei Linearantriebselemente 9 Kräfte auf den Reifen 15 ausüben, die größte Kraftkomponente dieser Kräfte in Richtung der Radialkraftkomponente 29 orientiert ist. Diese zwei Linearantriebselemente 9 können auch als Radialantriebselemente 35 bezeichnet werden. Die Radialantriebselemente 35 sind so angeordnet, dass der Reifen 15 mittig zwischen den Radialantriebselementen 35 angeordnet ist. Jedes der Radialantriebselemente 35 ist mit seinem ersten Ende 11 schwenkbar an dem Rahmen angebracht, wobei die beiden Schwenkachsen entlang derselben Gerade verlaufen, auf der auch der Kontaktpunkt 23 angeordnet ist. Weiter sind die Radialantriebselemente 35 mit den zweiten Enden 13 schwenkbar an dem Reifenhalter 3 angebracht, wobei die beiden Schwenkachsen entlang derselben Gerade verlaufen.

Weiter sind in der in den Figuren 1 und 2 dargestellten Ausgangskonfiguration die sechs Linearantriebselemente 9 derart angeordnet, dass zwei Linearantriebselemente 9 der sechs Linearantriebselemente 9 jeweils in der Ausgangskonfiguration so angeordnet sind, dass durch Einstellen der zwei Linearantriebselemente 9 der Reifen 15 aus seiner Orientierung in der Ausgangskonfiguration um eine Horizontalachse, die in den Figuren 1 und 2 parallel zu der Tangentialkraftkomponente 27 und in den Tangentialebenen verläuft, und eine Vertikalachse, die in den Figuren 1 und 2 entlang der Radialkraftkomponente 29 verläuft, verschwenkt werden kann. Diese zwei Linearantriebselemente 9 können auch als Lenk-/Sturzantriebselemente 37 bezeichnet werden. Der Reifenhalter 3 weist einen schwenkbar am Rahmen angebrachten ersten Schwenkarm 39 und einen schwenkbar am Rahmen angebrachten zweiten Schwenkarm 41 auf. Weiter weist der Reifenhalter 3 eine schwenkbar an dem ersten Schwenkarm 39 angebrachte erste Koppelstange 43 und eine schwenkbar am dem zweiten Schwenkarm 41 angebrachte zweite Koppelstange 45 auf. Die erste Koppelstange 43 und die zweite Koppelstange 45 sind jeweils an einem Abschnitt des Reifenhalters 3 schwenkbar angebracht. An dem ersten Schwenkarm 39 ist das zweite Ende 13 eines ersten Lenk-/Sturzantriebselements 37 der zwei Lenk-/Sturzantriebselemente 37 schwenkbar angebracht. An dem zweiten Schwenkarm 41 ist das zweite Ende 13 eines zweiten Lenk-/Sturzantriebselements 37 der zwei Lenk-/Sturzantriebselemente 37 schwenkbar angebracht.

In der in den Figuren 1 und 2 dargestellten ersten Ausführungsform des Reifenprüfstands 1 sind die zwei Radialantriebselemente 35 nicht senkrecht zu den Tangentialebenen ausgerichtet und nicht parallel zueinander ausgerichtet. Vielmehr erstrecken sich die zwei Radialantriebselemente 35 in einem Winkel zueinander von dem Abschnitt des Reifenhalters 3 zu den Tangentialebenen hin, wobei der Abstand zwischen den zwei Radialantriebselementen 35 von dem Abschnitt des Reifenhalters 3 zu den Tangentialebenen hin zunimmt.

Weiter sind in der in den Figuren 1 und 2 dargestellten ersten Ausführungsform des Reifenprüfstands 1 die erste Koppelstage 43 und die zweite Koppelstange 45 nicht parallel zueinander angeordnet. Vielmehr erstrecken sich die erste Koppelstange 43 und die zweite Koppelstange 45 in einem Winkel zueinander von dem Abschnitt des Reifenhalters 3 zu dem ersten Schwenkarm 39 bzw. zu dem zweiten Schwenkarm 41 hin, wobei der Abstand zwischen der ersten Koppelstange 43 und der zweiten Koppelstange 45 von dem Abschnitt des Reifenhalters zu dem ersten Schwenkarm 39 bzw. zu dem zweiten Schwenkarm 41 hin zunimmt.

Weiter sind das Lateralantriebselement 31 und das Tangentialantriebselement 33 derart an dem Reifenhalter 3 schwenkbar angebracht, dass sich eine erste Gerade, die entlang der Haupterstreckungsrichtung des Lateralantriebselements 31 orientiert ist, und eine zweite Gerade schneiden, die entlang der Haupterstreckungsrichtung des Tangentialantriebselements 33 orientiert ist.

Außerdem sind das erste Radialantriebselement 35 und die erste Koppelstange 43 derart an dem Reifenhalter 3 schwenkbar angebracht, dass sich eine erste Gerade, die entlang der Haupterstreckungsrichtung des ersten Radialantriebselements 35 orientiert ist, und eine zweite Gerade schneiden, die entlang der Haupterstreckungsrichtung der ersten Koppelstange 43 orientiert ist.

Weiter sind das zweite Radialantriebselement 35 und die zweite Koppelstange 45 derart an dem Reifenhalter 3 schwenkbar angebracht, dass sich eine erste Gerade, die entlang der Haupterstreckungsrichtung des zweiten Radialantriebselements 35 orientiert ist, und eine zweite Gerade schneiden, die entlang der Haupterstreckungsrichtung der zweiten Koppelstange 45 orientiert ist.

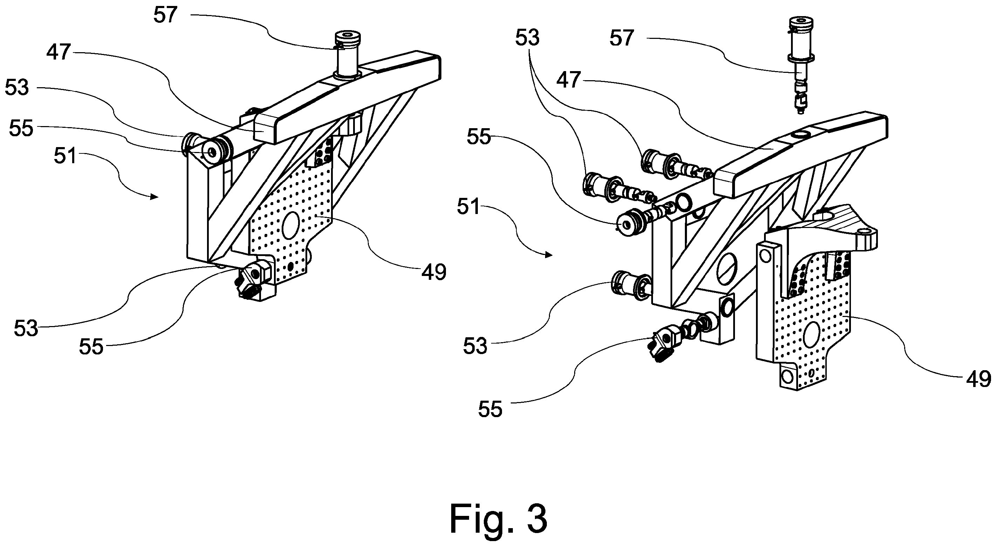

Figur 3 zeigt einen Rahmenabschnitt 47, einen Reifenabschnitt 49 sowie eine Kraftmesseinheit 51 des Reifenhalters 3 der ersten Ausführungsform des erfindungsgemäßen Reifenprüfstands 1. Der Rahmenabschnitt 47 ist an dem Rahmen befestigt. An dem Reifenabschnitt 49 ist, wie in den Figuren 1 und 2 dargestellt, der Reifen 15 drehbar angebracht. Der Rahmenabschnitt 47 und der Reifenabschnitt 49 sind über die Kraftmesseinheit 51 miteinander verbunden. Die Kraftmesseinheit 51 weist drei Lateralkraftmesselement 53 auf, die sich in Richtung der Lateralkraftkomponente 25 erstrecken (siehe Figuren 1 und 2). Weiter weist die Kraftmesseinheit 51 zwei Tangentialkraftmesselemente 55, die sich in Richtung der Tangentialkraftkomponente 27 erstrecken (siehe Figuren 1 und 2). Weiter weist die Kraftmesseinheit 51 ein Radialkraftmesselement 57 auf, das sich in Richtung der Radialkraftkomponente 29 (siehe Figuren 1 und 2) erstreckt.

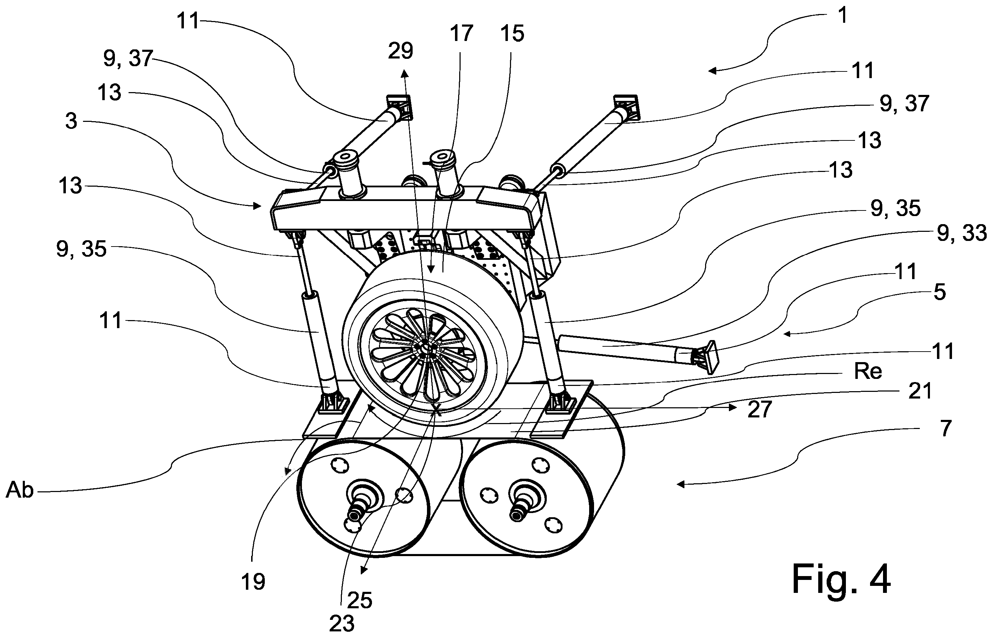

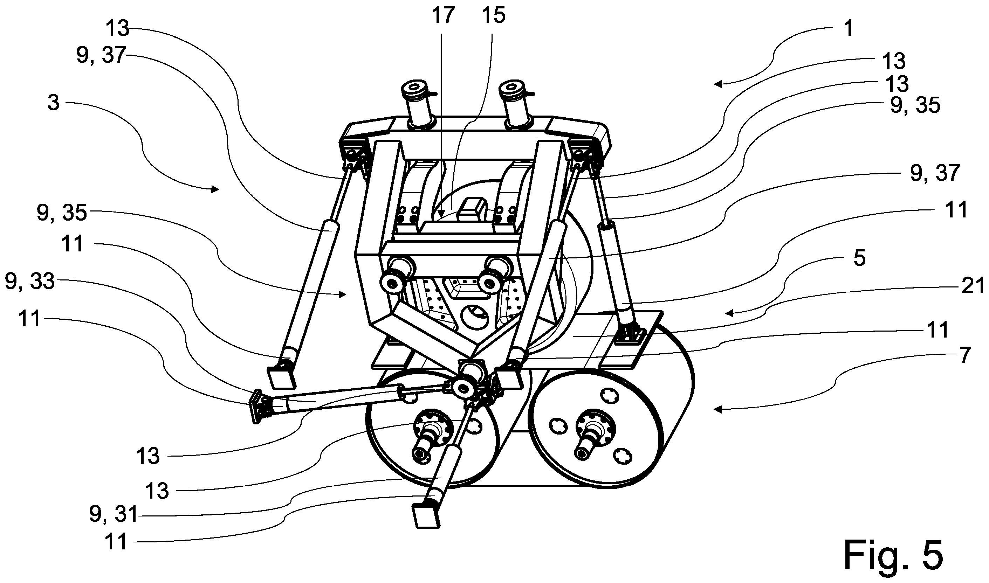

In den Figuren 4 und 5 ist jeweils eine schematische Ansicht einer zweiten Ausführungsform des erfindungsgemäßen Reifenprüfstands 1 dargestellt. Die zweite Ausführungsform des erfindungsgemäßen Reifenprüfstands 1 entspricht im Wesentlichen der ersten Ausführungsform des erfindungsgemäßen Reifenprüfstands 1. Jedoch weist der Reifenhalter 3 der zweiten Ausführungsform keinen ersten Schwenkarm 39, keinen zweiten Schwenkarm 41, keine erste Koppelstange 43 und keine zweite Koppelstange 45 auf. Vielmehr sind die die zwei Lenk-/Sturzantriebselemente 37 jeweils mit dem ersten Ende 11 schwenkbar an dem Rahmen und mit dem zweiten Ende 13 schwenkbar an dem Reifenhalter 3 angebracht, insbesondere an dem Abschnitt des Reifenhalters 3. Weiter sind in der zweiten Ausführungsform des Reifenprüfstands 1 die zwei Radialantriebselemente 35 senkrecht zu den Tangentialebenen ausgerichtet und parallel zueinander ausgerichtet. Weiter sind in der zweiten Ausführungsform des Reifenprüfstands 1 die beiden Lenk-/Sturzantriebselemente 37 parallel zueinander angeordnet. Weiter sind das erste Radialantriebselement 35 und das erste Lenk-/Sturzantriebselement 37 derart an dem Reifenhalter 3 schwenkbar angebracht, dass sich eine erste Gerade, die entlang der Haupterstreckungsrichtung des ersten Radialantriebselements 35 orientiert ist, und eine zweite Gerade schneiden, die entlang der Haupterstreckungsrichtung des ersten Lenk-/Sturzantriebselements 37 orientiert ist. Weiter sind das zweite Radialantriebselement 35 und das zweite Lenk-/Sturzantriebselement 37 derart an dem Reifenhalter 3 schwenkbar angebracht, dass sich eine erste Gerade, die entlang der Haupterstreckungsrichtung des zweiten Radialantriebselements 35 orientiert ist, und eine zweite Gerade schneiden, die entlang der Haupterstreckungsrichtung des zweiten Lenk-/Sturzantriebselements 37 orientiert ist. Weiter weist der Reifenhalter 3 der zweiten Ausführungsform des erfindungsgemäßen Reifenprüfstands 1 die in Figur 3 gezeigten und im Zusammenhang mit der ersten Ausführungsform beschriebenen Rahmenabschnitt 47, Reifenabschnitt 49 und Kraftmesseinheit 51 auf.

Die im Zusammenhang mit der ersten Ausführungsform des erfindungsgemäßen Reifenprüfstands 1 beschriebenen Merkmale, technischen Effekte und/oder Vorteile gelten zumindest in analoger Weise auch für die zweite Ausführungsform des erfindungsgemäßen Reifenprüfstands 1, sodass an dieser Stelle auf eine entsprechende Wiederholung verzichtet wird.

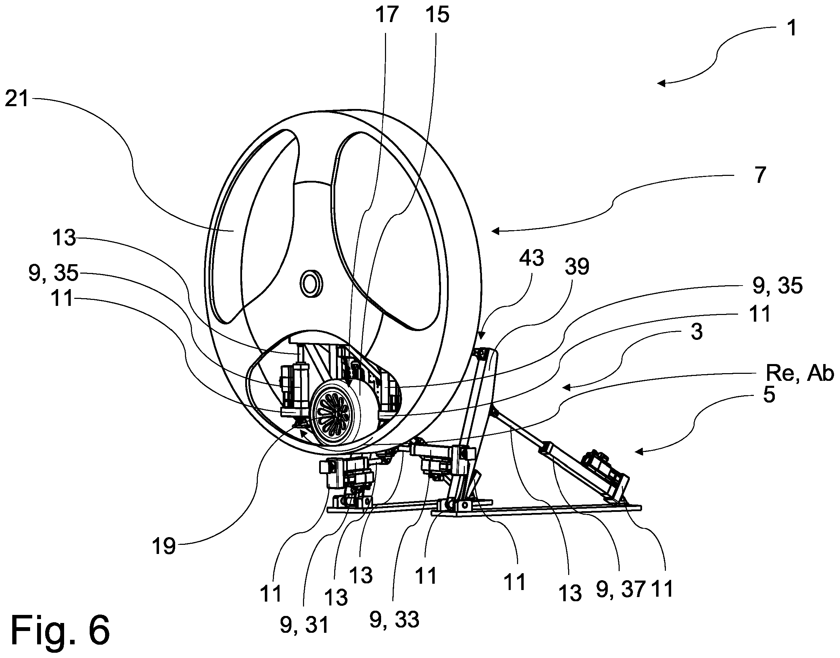

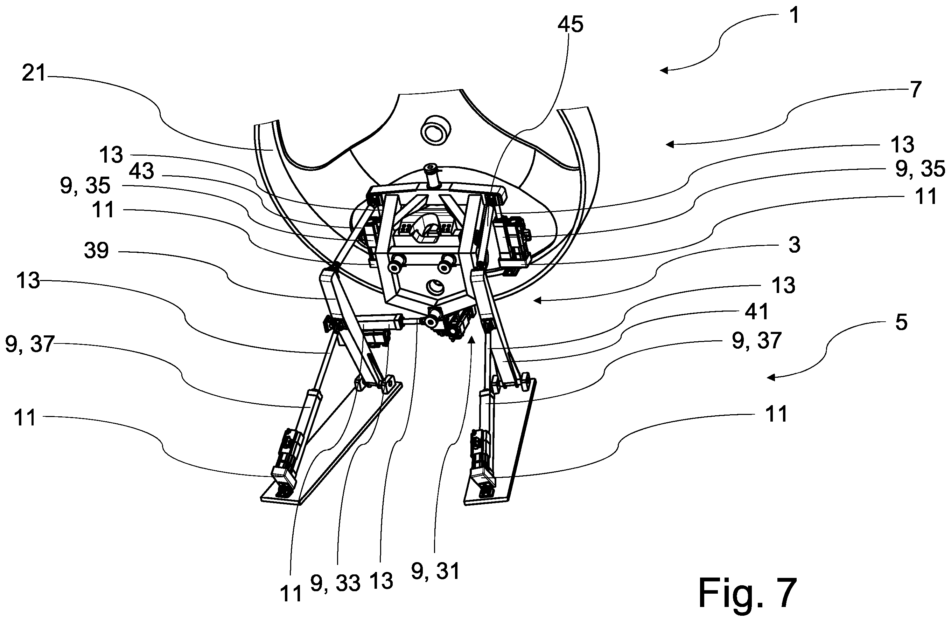

In den Figuren 6 und 7 ist jeweils eine schematische Ansicht einer dritten Ausführungsform des erfindungsgemäßen Reifenprüfstands 1 dargestellt. Die dritte Ausführungsform des erfindungsgemäßen Reifenprüfstands 1 entspricht im Wesentlichen der ersten Ausführungsform des erfindungsgemäßen Reifenprüfstands 1. In der dritten Ausführungsform weist die Abrollflächeneinheit 7 jedoch eine gekrümmte Abrollfläche 21 auf, die durch eine Innenumfangsfläche einer am Rahmen drehbar gelagerte und drehbar mithilfe der Abrollflächenantriebseinheit antreibbare Trommel gebildet ist. Weiter ist das Lateralantriebselement 31 der dritten Ausführungsform in einer Richtung angeordnet, die parallel zu der Richtung der Radialkraftkomponente 29 (siehe Figuren 1 und 4) verläuft. In den Figuren 6 und 7 ist das Lateralantriebselement 31 unterhalb dem Reifen 15 und unterhalb der Abrollfläche 21 angeordnet. Die Anordnung des Lateralantriebselements 31 in einer Richtung, die parallel zu der Richtung der Radialkraftkomponente 29 verläuft, stellt eine besonders platzsparende Variante des Reifenprüfstands 1 bereit. Die Verwendung einer Umlauffläche einer drehbar gelagerten Trommel als Abrollfläche ist in diesem Zusammenhang besonders vorteilhaft, da hierdurch ein besonders großer Raum für das Lateralantriebselement 31 bereitgestellt wird, sodass dieses entsprechend robust ausgebildet sein kann. Weiter sind die Radialantriebselemente 35 so angeordnet, dass der Reifen 15 mittig zwischen den Radialantriebselementen 35 angeordnet ist. Jedes der Radialantriebselemente 35 ist mit seinem ersten Ende 11 schwenkbar an dem Rahmen angebracht, wobei die beiden Schwenkachsen entlang derselben Gerade verlaufen, auf der der Kontaktpunkt 23 jedoch nicht angeordnet ist. In der dritten Ausführungsform ist der Kontaktpunkt 23 in den Tangentialebenen angeordnet, wobei die Gerade, entlang derer die beiden Schwenkachsen verlaufen, parallel zu den Tangentialebenen verläuft und von diesen in Richtung der Drehachse 19 beabstandet ist. Weiter sind die Radialantriebselemente 35 mit den zweiten Enden 13 schwenkbar an dem Reifenhalter 3 angebracht, wobei die beiden Schwenkachsen entlang derselben Gerade verlaufen. Weiter sind in der dritten Ausführungsform des Reifenprüfstands 1 die zwei Radialantriebselemente 35 senkrecht zu den Tangentialebenen ausgerichtet und parallel zueinander ausgerichtet. Weiter weist der Reifenhalter 3 der dritten Ausführungsform des erfindungsgemäßen Reifenprüfstands 1 die in Figur 3 gezeigten und im Zusammenhang mit der ersten Ausführungsform beschriebenen Rahmenabschnitt 47, Reifenabschnitt 49 und Kraftmesseinheit 51 auf.

Die im Zusammenhang mit der ersten Ausführungsform und im Zusammenhang mit der zweiten Ausführungsform des erfindungsgemäßen Reifenprüfstands 1 beschriebenen Merkmale, technischen Effekte und/oder Vorteile gelten zumindest in analoger Weise auch für die dritte Ausführungsform des erfindungsgemäßen Reifenprüfstands 1, sodass an dieser Stelle auf eine entsprechende Wiederholung verzichtet wird.

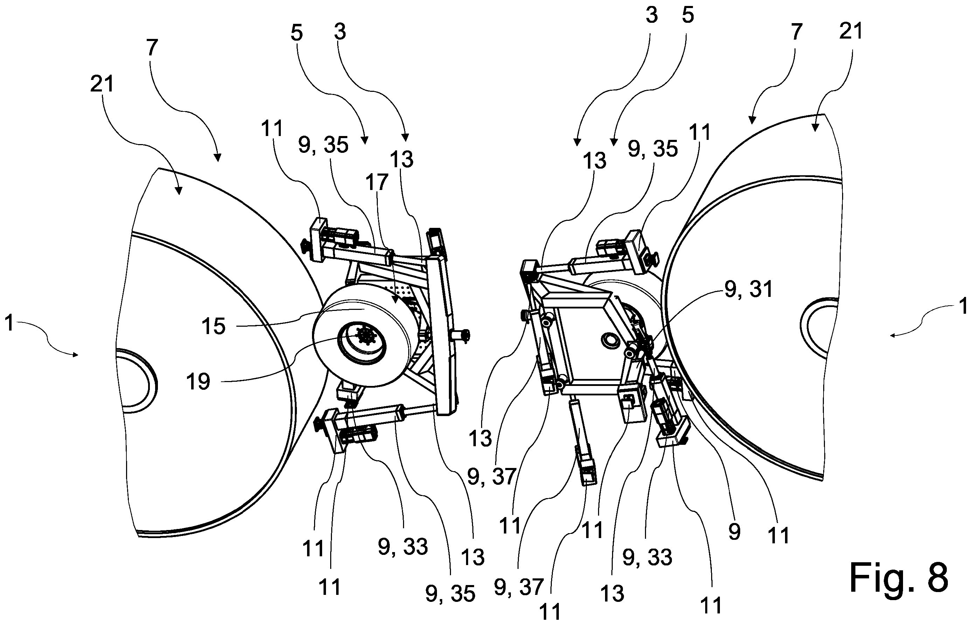

In Figur 8 sind zwei schematische Ansichten einer vierten Ausführungsform des erfindungsgemäßen Reifenprüfstands 1 dargestellt. Die vierte Ausführungsform des erfindungsgemäßen Reifenprüfstands 1 entspricht im Wesentlichen der ersten Ausführungsform des erfindungsgemäßen Reifenprüfstands 1. Die in Figur 8 dargestellte Anordnung des Reifenprüfstands 1 kann auch als horizontale Anordnung bezeichnet werden. In der vierten Ausführungsform weist die Abrollflächeneinheit 7 jedoch eine gekrümmte Abrollfläche 21 auf, die durch eine Außenumfangsfläche einer am Rahmen drehbar gelagerte und drehbar mithilfe der Abrollflächenantriebseinheit antreibbare Trommel gebildet ist. In der vierten Ausführungsform sind die Radialantriebselemente 35 in der Ausgangskonfiguration in Richtung der Drehachse 19 (Drehachsenrichtung) zueinander versetzt angeordnet, sodass beispielsweise in der linken schematischen Ansicht in Figur 8 der Reifen 15 von oben zu dem Reifenhalter 3 und von diesem nach oben weg verbracht werden kann. Dadurch, dass die Radialantriebselemente 35 in der Ausgangskonfiguration in Richtung der Drehachse 19 zueinander versetzt angeordnet sind, können insbesondere schwere Reifen 15 mit einem Kran an dem Reifenprüfstand 1 angebracht werden und von diesem entfernt werden.

Die im Zusammenhang mit der ersten Ausführungsform, im Zusammenhang mit der zweiten Ausführungsform und im Zusammenhang mit der dritten Ausführungsform des erfindungsgemäßen Reifenprüfstands 1 beschriebenen Merkmale, technischen Effekte und/oder Vorteile gelten zumindest in analoger Weise auch für die vierte Ausführungsform des erfindungsgemäßen Reifenprüfstands 1, sodass an dieser Stelle auf eine entsprechende Wiederholung verzichtet wird.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichen

- 1: Reifenprüfstand
- 3: Reifenhalter
- 5: Hexapod-Anordnung
- 7: Abrollflächeneinheit
- 9: Linearantriebselement
- 11: erstes Ende eines Linearantriebselements
- 13: zweites Ende eines Linearantriebselements
- 15: Reifen
- 17: Lauffläche
- 19: Drehachse
- 21: Abrollfläche
- 23: Kontaktpunkt
- 25: Lateralkraftkomponente
- 27: Tangentialkraftkomponente
- 29: Radialkraftkomponente
- 31: Lateralantriebselement
- 33: Tangentialantriebselement
- 35: Radialantriebselement
- 37: Lenk-/Sturzantriebselemente
- 39: erster Schwenkarm
- 41: zweiter Schwenkarm
- 43: erste Koppelstange
- 45: zweite Koppelstange
- 47: Rahmenabschnitt
- 49: Reifenabschnitt
- 51: Kraftmesseinheit
- 53: Lateralkraftmesselement
- 55: Tangentialkraftmesselement
- 57: Radialkraftmesselement
- Re: Reifenumlaufrichtung
- Ab: Abrollflächenumlaufrichtung

## Patentansprüche

1. Reifenprüfstand (1)
mit einem Rahmen,
mit einem Reifenhalter (3), an dem ein Reifen (15) mit einer Lauffläche (17) um seine Drehachse (19) drehbar angebracht werden kann,
mit einer Hexapod-Anordnung (5) mit sechs Linearantriebselementen (9), wobei jedes der sechs Linearantriebselemente (9) mit einem ersten Ende (11) an dem Rahmen und einem zweiten Ende (13) an dem Reifenhalter (3) angebracht ist, und
mit einer Abrollflächeneinheit (7) mit einer Abrollfläche (21), die gegenüber dem Rahmen bewegt werden kann,
wobei dann, wenn an dem Reifenhalter (3) der Reifen (15) drehbar angebracht ist, der Reifen (15) durch Einstellen der Linearantriebselemente (9) der Hexapod-Anordnung (5) in eine Kontaktposition verbracht werden kann, in der die Lauffläche (17) des Reifens (15) und die Abrollfläche (21) in Kontakt sind,
wobei dann, wenn die Lauffläche (17) und die Abrollfläche (21) in Kontakt sind und die Abrollfläche (21) gegenüber dem Reifen (15) bewegt wird, der Reifen (15) auf der Abrollfläche (21) abrollt,
wobei in einer Ausgangskonfiguration eine parallel zur Drehachse (19) verlaufende Tangentialebene an der Lauffläche (17) und eine Tangentialebene an der Abrollfläche (21) identisch sind, die Tangentialgeschwindigkeit der Lauffläche (17) und die Tangentialgeschwindigkeit der Abrollfläche (21) an einem Kontaktpunkt (23) zwischen der Lauffläche (17) und der Abrollfläche (21) identisch sind, und jede auf den Reifen (15) wirkende Kraft in eine in den Tangentialebenen und parallel zur Drehachse (19) verlaufende Lateralkraftkomponente (25), eine in den Tangentialebenen und senkrecht zu der Lateralkraftkomponente (25) verlaufende Tangentialkraftkomponente (27) und eine senkrecht zu den Tangentialebenen verlaufende Radialkraftkomponente (29) aufgeteilt werden kann, **dadurch gekennzeichnet, dass**
die sechs Linearantriebselemente (9) in der Ausgangskonfiguration derart angeordnet sind, dass
mindestens ein Linearantriebselement (9) der sechs Linearantriebselemente (9) so angeordnet ist, dass dann, wenn das mindestens eine Linearantriebselement (9) eine Kraft auf den Reifen (15) ausübt, die größte Kraftkomponente dieser Kraft in Richtung der Lateralkraftkomponente (25) orientiert ist,
mindestens ein Linearantriebselement (9) der sechs Linearantriebselemente (9) so angeordnet ist, dass dann, wenn das mindestens eine Linearantriebselement (9) eine Kraft auf den Reifen (15) ausübt, die größte Kraftkomponente dieser Kraft in Richtung der Tangentialkraftkomponente (27) orientiert ist, und
mindestens ein Linearantriebselement (9) der sechs Linearantriebselemente (9) so angeordnet ist, dass dann, wenn das mindestens eine Linearantriebselement (9) eine Kraft auf den Reifen (15) ausübt, die größte Kraftkomponente dieser Kraft in Richtung der Radialkraftkomponente (29) orientiert ist,
wobei der Reifenhalter (3) einen am Rahmen befestigten Rahmenabschnitt (47) und einen Reifenabschnitt (49) aufweist, an dem der Reifen (15) drehbar angebracht werden kann, wobei der Rahmenabschnitt (47) und der Reifenabschnitt (49) über eine Kraftmesseinheit (51) verbunden sind, wobei die Kraftmesseinheit (51) mindestens ein Lateralkraftmesselement (53), das sich in Richtung der Lateralkraftkomponente (25) erstreckt, mindestens ein Tangentialkraftmesselement, das sich in Richtung der Tangentialkraftkomponente (27) erstreckt, und mindestens ein Radialkraftmesselement aufweist, das sich in Richtung der Radialkraftkomponente (29) erstreckt, wenn der Reifenprüfstand (1) in der Ausgangskonfiguration ist.

2. Reifenprüfstand (1) nach dem vorhergehenden Anspruch, wobei dann, wenn an dem Reifenhalter (3) der Reifen (15) drehbar angebracht ist und dieser in der Kontaktposition ist, das mindestens eine Linearantriebselement (9), das so angeordnet ist, dass dann, wenn das mindestens eine Linearantriebselement (9) eine Kraft auf den Reifen (15) ausübt, die größte Kraftkomponente dieser Kraft in Richtung der Lateralkraftkomponente (25) orientiert ist, in einer Richtung angeordnet ist, die parallel zu der Richtung der Radialkraftkomponente (29) verläuft.

3. Reifenprüfstand (1) nach einem der vorhergehenden Ansprüche, wobei zwei Linearantriebselemente (9) der sechs Linearantriebselemente (9) jeweils so angeordnet sind, dass dann, wenn die zwei Linearantriebselemente (9) Kräfte auf den Reifen (15) ausüben, die größte Kraftkomponente dieser Kräfte in Richtung der Radialkraftkomponente (29) orientiert ist.

4. Reifenprüfstand (1) nach Anspruch 3, wobei dann, wenn an dem Reifenhalter (3) der Reifen (15) drehbar angebracht ist, der Reifen (15) in der Kontaktposition zwischen den zwei Linearantriebselementen (9) angeordnet ist, die jeweils so angeordnet sind, dass dann, wenn die zwei Linearantriebselemente (9) jeweils eine Kraft auf den Reifen (15) ausüben, die größte Kraftkomponente jeder dieser Kräfte in Richtung der Radialkraftkomponente (29) orientiert ist.

5. Reifenprüfstand (1) nach einem der Ansprüche 3 oder 4, wobei die zwei Linearantriebselemente (9), die jeweils so angeordnet sind, dass dann, wenn die zwei Linearantriebselemente (9) jeweils eine Kraft auf den Reifen (15) ausüben, die größte Kraftkomponente jeder dieser Kräfte in Richtung der Radialkraftkomponente (29) orientiert ist, in der Ausgangskonfiguration in Drehachsenrichtung zueinander versetzt angeordnet sind.

6. Reifenprüfstand (1) nach einem der vorhergehenden Ansprüche, wobei mindestens ein Linearantriebselement (9) der sechs Linearantriebselemente (9) in der Ausgangskonfiguration so angeordnet ist, dass durch Einstellen des mindestens einen Linearantriebselements (9) der Reifen (15) aus seiner Orientierung in der Ausgangskonfiguration um eine Horizontalachse und eine Vertikalachse verschwenkt werden kann.

7. Reifenprüfstand (1) nach einem der vorhergehenden Ansprüche, wobei zwei Linearantriebselemente (9) der sechs Linearantriebselemente (9) jeweils in der Ausgangskonfiguration so angeordnet sind, dass durch Einstellen der zwei Linearantriebselemente (9) der Reifen (15) aus seiner Orientierung in der Ausgangskonfiguration um eine Horizontalachse und eine Vertikalachse verschwenkt werden kann.

8. Reifenprüfstand (1) nach einem der Ansprüche 6 oder 7, wobei der Reifenhalter (3) einen schwenkbar am Rahmen angebrachten ersten Schwenkarm (39) aufweist, an dem ein zweites Ende (13) eines ersten Linearantriebselements (9) des mindestens einen Linearantriebselements (9) schwenkbar angebracht ist, das in der Ausgangskonfiguration so angeordnet ist, dass durch Einstellen des Linearantriebselements (9) der Reifen (15) aus seiner Orientierung in der Ausgangskonfiguration um eine Horizontalachse und eine Vertikalachse verschwenkt werden kann.

9. Reifenprüfstand (1) nach einem der Ansprüche 6, 7 oder 8, wobei der Reifenhalter (3) einen schwenkbar am Rahmen angebrachten zweiten Schwenkarm (41) aufweist, an dem ein zweites Ende (13) eines zweiten Linearantriebselements (9) des mindestens einen Linearantriebselements (9) schwenkbar angebracht ist, das in der Ausgangskonfiguration so angeordnet ist, dass durch Einstellen des Linearantriebselements (9) der Reifen (15) aus seiner Orientierung in der Ausgangskonfiguration um eine Horizontalachse und eine Vertikalachse verschwenkt werden kann.

10. Reifenprüfstand (1) nach einem der vorhergehenden Ansprüche, wobei wenigstens eines der Linearantriebselemente (9) der Hexapod-Anordnung (5) als Hydraulikzylinder ausgebildet ist.

11. Reifenprüfstand (1) nach einem der vorhergehenden Ansprüche, wobei wenigstens eines der Linearantriebselemente (9) der Hexapod-Anordnung (5) als elektromechanischer Linearantrieb ausgebildet ist.

12. Reifenprüfstand (1) nach einem der vorhergehenden Ansprüche, wobei der Reifenprüfstand (1) eine Reifenantriebseinheit aufweist, die dann, wenn an dem Reifenhalter (3) der Reifen (15) drehbar angebracht ist, diesen in einer Reifenumlaufrichtung (Re) antreiben kann.

13. Reifenprüfstand (1) nach einem der vorhergehenden Ansprüche, wobei der Reifenprüfstand (1) eine Reifenabbremseinheit aufweist, die dann, wenn an dem Reifenhalter (3) der Reifen (15) drehbar angebracht ist, diesen in einer Reifenumlaufrichtung (Re) abbremsen kann.

## Claims

1. Tire test stand (1)
with a frame,
with a tire holder (3) to which a tire (15) with a tread (17) can be attached so as to be rotatable about its axis of rotation (19),
with a hexapod arrangement (5) with six linear drive elements (9), each of the six linear drive elements (9) being attached at a first end (11) to the frame and at a second end (13) to the tire holder (3), and
with a rolling surface unit (7) with a rolling surface (21) which can be moved in relation to the frame,
wherein when the tire (15) is rotatably attached to the tire holder (3), the tire (15) can be brought by adjustment of the linear drive elements (9) of the hexapod arrangement (5) into a contact position in which the tread (17) of the tire (15) and the rolling surface (21) are in contact,
wherein when the tread (17) and the rolling surface (21) are in contact and the rolling surface (21) is moved in relation to the tire (15), the tire (15) rolls on the rolling surface (21),
wherein, in an initial configuration, a tangential plane running parallel to the axis of rotation (19) on the tread (17) and a tangential plane on the rolling surface (21) are identical, the tangential speed of the tread (17) and the tangential speed of the rolling surface (21) at a contact point (23) between the tread (17) and the rolling surface (21) are identical, and each force acting on the tire (15) can be divided into a lateral force component (25) running in the tangential planes and parallel to the axis of rotation (19), a tangential force component (27) running in the tangential planes and perpendicular to the lateral force component (25), and a radial force component (29) running perpendicular to the tangential planes, **characterized in that**
the six linear drive elements (9) are arranged in the initial configuration in such a manner that
at least one linear drive element (9) of the six linear drive elements (9) is arranged such that when the at least one linear drive element (9) exerts a force on the tire (15), the largest force component of said force is oriented in the direction of the lateral force component (25),
at least one linear drive element (9) of the six linear drive elements (9) is arranged such that when the at least one linear drive element (9) exerts a force on the tire (15), the largest force component of said force is oriented in the direction of the tangential force component (27), and
at least one linear drive element (9) of the six linear drive elements (9) is arranged such that when the at least one linear drive element (9) exerts a force on the tire (15), the largest force component of said force is oriented in the direction of the radial force component (29),
wherein the tire holder (3) has a frame portion (47) fastened to the frame and a tire portion (49) to which the tire (15) can be rotatably attached, wherein the frame portion (47) and the tire portion (49) are connected via a force measuring unit (51), the force measuring unit (51) having at least one lateral force measuring element (53) which extends in the direction of the lateral force component (25), at least one tangential force measuring element which extends in the direction of the tangential force component ( 27), and at least one radial force measuring element which extends in the direction of the radial force component (29) when the tire test stand (1) is in the initial configuration.

2. Tire test stand (1) according to the preceding claim, wherein when the tire (15) is rotatably attached to the tire holder (3) and said tire is in the contact position, the at least one linear drive element (9), which is arranged such that when the at least one linear drive element (9) exerts a force on the tire (15), the largest force component of said force is oriented in the direction of the lateral force component (25), is arranged in a direction which runs parallel to the direction of the radial force component (29).

3. Tire test stand (1) according to either of the preceding claims, wherein two linear drive elements (9) of the six linear drive elements (9) are each arranged such that when the two linear drive elements (9) exert forces on the tire (15), the greatest force component of said forces is oriented in the direction of the radial force component (29).

4. Tire test stand (1) according to Claim 3, wherein when the tire (15) is rotatably attached to the tire holder (3), the tire (15) is arranged in the contact position between the two linear drive elements (9) which are each arranged such that when the two linear drive elements (9) each exert a force on the tire (15), the largest force component of each of said forces is oriented in the direction of the radial force component (29).

5. Tire test stand (1) according to either of Claims 3 and 4, wherein the two linear drive elements (9), which are each arranged such that when the two linear drive elements (9) each exert a force on the tire (15), the greatest force component of each of said forces is oriented in the direction of the radial force component (29), are offset from one another in the direction of the axis of rotation in the initial configuration.

6. Tire test stand (1) according to one of the preceding claims, wherein at least one linear drive element (9) of the six linear drive elements (9) is arranged in the initial configuration such that, by adjustment of the at least one linear drive element (9), the tire (15) can be pivoted about a horizontal axis and a vertical axis from its orientation in the initial configuration.

7. Tire test stand (1) according to one of the preceding claims, wherein two linear drive elements (9) of the six linear drive elements (9) are each arranged in the initial configuration such that, by adjustment of the two linear drive elements (9), the tire (15) can be pivoted about a horizontal axis and a vertical axis from its orientation in the initial configuration.

8. Tire test stand (1) according to either of Claims 6 and 7, wherein the tire holder (3) has a first pivot arm (39) which is pivotably attached to the frame and to which a second end (13) of a first linear drive element (9) of the at least one linear drive element (9) is pivotably attached, which pivot arm is arranged in the initial configuration such that, by adjustment of the linear drive element (9), the tire (15) can be pivoted about a horizontal axis and a vertical axis from its orientation in the initial configuration.

9. Tire test stand (1) according to one of Claims 6, 7 or 8, wherein the tire holder (3) has a second pivot arm (41) which is pivotably attached to the frame and to which a second end (13) of a second linear drive element (9) of the at least one linear drive element (9) is pivotably attached, which pivot arm is arranged in the initial configuration such that, by adjustment of the linear drive element (9), the tire (15) can be pivoted about a horizontal axis and a vertical axis from its orientation in the initial configuration.

10. Tire test stand (1) according to one of the preceding claims, wherein at least one of the linear drive elements (9) of the hexapod arrangement (5) is designed as a hydraulic cylinder.

11. Tire test stand (1) according to one of the preceding claims, wherein at least one of the linear drive elements (9) of the hexapod arrangement (5) is designed as an electromechanical linear drive.

12. Tire test stand (1) according to one of the preceding claims, wherein the tire test stand (1) has a tire drive unit which, when the tire (15) is rotatably attached to the tire holder (3), can drive said tire in a tire revolving direction (Re).

13. Tire test stand (1) according to one of the preceding claims, wherein the tire test stand (1) has a tire braking unit which, when the tire (15) is rotatably attached to the tire holder (3), can brake said tire in a tire revolving direction (Re).

## Revendications

1. Banc d'essai (1) de pneumatique
avec un cadre,
avec un support (3) de pneumatique, sur lequel un pneumatique (15) avec une bande de roulement (17) peut être installé de manière à pouvoir tourner autour de son axe de rotation (19),
avec un ensemble hexapode (5) avec six éléments d'entraînement linéaire (9), chacun des six éléments d'entraînement linéaire (9) étant installé par une première extrémité (11) sur le cadre et par une seconde extrémité (13) sur le support (3) de pneumatique, et
avec une unité (7) de surface de roulement avec une surface de roulement (21), qui peut être déplacée par rapport au cadre,
le pneumatique (15) pouvant être amené en réglant les éléments d'entraînement linéaire (9) de l'ensemble hexapode (5) dans une position de contact, dans laquelle la bande de roulement (17) du pneumatique (15) et la surface de roulement (21) sont en contact, lorsque le pneumatique (15) est installé de manière à pouvoir tourner sur le support (3) de pneumatique,
le pneumatique (15) roulant sur la surface de roulement (21) lorsque la bande de roulement (17) et la surface de roulement (21) sont en contact et que la surface de roulement (21) est déplacée par rapport au pneumatique (15),
un plan tangentiel s'étendant parallèlement à l'axe de rotation (19) sur la bande de roulement (17) et un plan tangentiel sur la surface de roulement (21) étant identiques dans une configuration de départ, la vitesse tangentielle de la bande de roulement (17) et la vitesse tangentielle de la surface de roulement (21) étant identiques sur un point de contact (23) entre la bande de roulement (17) et la surface de roulement (21), et chaque force agissant sur le pneumatique (15) pouvant être divisée en une composante de force latérale (25) s'étendant dans les plans tangentiels et parallèlement à l'axe de rotation (19), en une composante de force tangentielle (27) s'étendant dans les plans tangentiels et perpendiculairement à la composante de force latérale (25) et en une composante de force radiale (29) s'étendant perpendiculairement aux plans tangentiels, **caractérisé en ce que**
les six éléments d'entraînement linéaire (9) sont disposés de telle manière dans la configuration de départ que
au moins un élément d'entraînement linéaire (9) des six éléments d'entraînement linéaire (9) est disposé de telle sorte que, lorsque l'au moins un élément d'entraînement linéaire (9) exerce une force sur le pneumatique (15), la composante de force la plus grande de ladite force est orientée en direction de la composante de force latérale (25),
au moins un élément d'entraînement linéaire (9) des six éléments d'entraînement linéaire (9) est disposé de telle sorte que, lorsque l'au moins un élément d'entraînement linéaire (9) exerce une force sur le pneumatique (15), la composante de force la plus grande de ladite force est orientée en direction de la composante de force tangentielle (27), et
au moins un élément d'entraînement linéaire (9) des six éléments d'entraînement linéaire (9) est disposé de telle sorte que, lorsque l'au moins un élément d'entraînement linéaire (9) exerce une force sur le pneumatique (15), la composante de force la plus grande de ladite force est orientée en direction de la composante de force radiale (29),
le support (3) de pneumatique comportant une section de cadre (47) fixée sur le cadre et une section de pneumatique (49), sur laquelle le pneumatique (15) peut être installé de manière à pouvoir tourner, la section de cadre (47) et la section de pneumatique (49) étant reliées par une unité de mesure de force (51), l'unité de mesure de force (51) comportant au moins un élément de mesure de force latérale (53), qui s'étend en direction de la composante de force latérale (25), au moins un élément de mesure de force tangentielle, qui s'étend en direction de la composante de force tangentielle (27), et au moins un élément de mesure de force radiale, qui s'étend en direction de la composante de force radiale (29) lorsque le banc d'essai (1) de pneumatique est dans la configuration de départ.

2. Banc d'essai (1) de pneumatique selon la revendication précédente, l'au moins un élément d'entraînement linéaire (9), qui est disposé de telle sorte que, lorsque l'au moins un élément d'entraînement linéaire (9) exerce une force sur le pneumatique (15), la composante de force la plus grande de ladite force est orientée en direction de la composante de force latérale (25), étant disposé dans une direction qui s'étend parallèlement à la direction de la composante de force radiale (29), lorsque le pneumatique (15) est installé de manière à pouvoir tourner sur le support (3) de pneumatique et que celui-ci est dans la position de contact.

3. Banc d'essai (1) de pneumatique selon l'une des revendications précédentes, deux éléments d'entraînement linéaire (9) des six éléments d'entraînement linéaire (9) étant chacun disposés de telle sorte que, lorsque les deux éléments d'entraînement linéaire (9) exercent des forces sur le pneumatique (15), la composante de force la plus grande de ladite force est orientée en direction de la composante de force radiale (29).

4. Banc d'essai (1) de pneumatique selon la revendication 3, le pneumatique (15) étant disposé, lorsque le pneumatique (15) est installé de manière à pouvoir tourner sur le support (3) de pneumatique, dans la position de contact entre les deux éléments d'entraînement linéaire (9) qui sont chacun disposés de telle sorte que, lorsque les deux éléments d'entraînement linaire (9) exercent chacun une force sur le pneumatique (15), la composante de force la plus grande de chacune desdites forces est orientée en direction de la composante de force radiale (29).

5. Banc d'essai (1) de pneumatique selon l'une des revendications 3 ou 4, les deux éléments d'entraînement linéaire (9), qui sont chacun disposés de telle sorte que, lorsque les deux éléments d'entraînement linéaire (9) exercent chacun une force sur le pneumatique (15), la composante de force la plus grande de chacune desdites forces est orientée en direction de la composante de force radiale (29), étant disposés de manière décalée l'un par rapport à l'autre dans la direction d'axe de rotation dans la configuration de départ.

6. Banc d'essai (1) de pneumatique selon l'une des revendications précédentes, au moins un élément d'entraînement linéaire (9) des six éléments d'entraînement linéaire (9) étant disposé dans la configuration de départ de telle sorte que le pneumatique (15) peut être pivoté autour d'un axe horizontal et d'un axe vertical dans la configuration de départ depuis son orientation en réglant l'au moins un élément d'entraînement linéaire (9).

7. Banc d'essai (1) de pneumatique selon l'une des revendications précédentes, deux éléments d'entraînement linéaire (9) des six éléments d'entraînement linéaire (9) étant disposés chacun dans la configuration de départ de telle sorte que le pneumatique (15) peut être pivoté autour d'un axe horizontal et d'un axe vertical dans la configuration de départ depuis son orientation en réglant les deux éléments d'entraînement linéaire (9).

8. Banc d'essai (1) de pneumatique selon l'une des revendications 6 ou 7, le support (3) de pneumatique comportant un premier bras pivotant (39) installé de manière à pouvoir pivoter sur le cadre, sur lequel une seconde extrémité (13) d'un premier élément d'entraînement linéaire (9) de l'au moins un élément d'entraînement linéaire (9) est installée de manière à pouvoir pivoter, lequel est disposé dans la configuration de départ de telle sorte que le pneumatique (15) peut être pivoté autour d'un axe horizontal et d'un axe vertical dans la configuration de départ depuis son orientation en réglant l'élément d'entraînement linéaire (9).

9. Banc d'essai (1) de pneumatique selon l'une des revendications 6, 7 ou 8, le support (3) de pneumatique comportant un deuxième bras pivotant (41) installé de manière à pouvoir pivoter sur le cadre, sur lequel une seconde extrémité (13) d'un deuxième élément d'entraînement linéaire (9) de l'au moins un élément d'entraînement linéaire (9) est installée de manière à pouvoir pivoter, lequel est disposé dans la configuration de départ de telle sorte que le pneumatique (15) peut être pivoté autour d'un axe horizontal et d'un axe vertical dans la configuration de départ depuis son orientation en réglant l'élément d'entraînement linéaire (9).

10. Banc d'essai (1) de pneumatique selon l'une des revendications précédentes, au moins un des éléments d'entraînement linéaire (9) de l'ensemble hexapode (5) étant réalisé comme un vérin hydraulique.

11. Banc d'essai (1) de pneumatique selon l'une des revendications précédentes, au moins un des éléments d'entraînement linéaire (9) de l'ensemble hexapode (5) étant réalisé comme un entraînement linéaire électromécanique.

12. Banc d'essai (1) de pneumatique selon l'une des revendications précédentes, le banc d'essai (1) de pneumatique comportant une unité d'entraînement de pneumatique, qui, lorsque le pneumatique (15) est installé de manière à pouvoir tourner sur le support (3) de pneumatique, peut entraîner celui-ci dans une direction de révolution (Re) de pneumatique.

13. Banc d'essai (1) de pneumatique selon l'une des revendications précédentes, le banc d'essai (1) de pneumatique comportant une unité de ralentissement de pneumatique, qui, lorsque le pneumatique (15) est installé de manière à pouvoir tourner sur le support (3) de pneumatique, peut ralentir celui-ci dans une direction de révolution (Re) de pneumatique.
